(19) Europäisches Patentamt
European Patent Office
Office européen des brevets

(11) **EP 3 247 079 A1**

(12) **EUROPEAN PATENT APPLICATION**
published in accordance with Art. 153(4) EPC

(43) Date of publication:
**22.11.2017 Bulletin 2017/47**

(51) Int Cl.:
***H04L 27/26*** *(2006.01)*

(21) Application number: **15881486.3**

(86) International application number:
**PCT/CN2015/072695**

(22) Date of filing: **10.02.2015**

(87) International publication number:
**WO 2016/127324 (18.08.2016 Gazette 2016/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventors:
• **WU, Tao
Shenzhen
Guangdong 518129 (CN)**
• **LIU, Sheng
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **PEAK-TO-AVERAGE POWER RATIO REDUCING METHOD, APPARATUS, DEVICE AND SYSTEM**

(57) Embodiments of the present invention provide a peak-to-average ratio reduction method, including: dividing subcarriers of an orthogonal frequency division multiplexing OFDM symbol that carries to-be-transmitted data, to obtain multiple blocks; determining multiple phase factors corresponding to the multiple blocks, where the multiple phase factors are used to reduce a peak-to-average ratio of the OFDM symbol; transmitting the multiple phase factors by using a particular subcarrier of the OFDM symbol; and multiplying each block in the multiple blocks by a corresponding phase factor, and performing transmission. Phase factor information of each block is transmitted by using the particular subcarrier, so that application of a PTS method in a WiFi system becomes possible, thereby effectively reducing a PAPR of data.

FIG. 9

## Description

### TECHNICAL FIELD

Embodiments of the present invention relate to the communications technologies, and in particular, to a peak-to-average ratio reduction method, apparatus, device, and system.

### BACKGROUND

Wireless Fidelity (English: Wireless Fidelity, WiFi for short) systems (or referred to as wireless local area network systems) have developed into various versions such as 802.11a, 802.11b, 802.11d, 802.11n, and 802.11ac. As technologies become more mature, a higher system transmission speed is provided. Currently, 802.11ac can support a maximum speed of 1 Gbps. On the other hand, the Wireless Fidelity system is widely applied in household and commercial environments due to its distinctive flexibility.

In a next-generation WiFi system 802.11ax, two new technologies are introduced to improve a system throughput, so as to meet increasingly high communication requirements:

I. Channel bonding (English: Channel Bonding)

In a conventional WiFi system, generally, a bandwidth of only 20 M is allocated, at a time, to a user for use. In subsequent WiFi standards, to provide a higher transmission rate, an allocated bandwidth will be multiplied. A maximum of four channels of 20 M may be allocated; that is, a bandwidth of 80 M is allocated, at a time, to a user for use.

II. Orthogonal frequency division multiple access (English: Orthogonal Frequency Division Multiple Access, OFDMA for short)

In the conventional WiFi system, a bandwidth of 20 M is divided into 64 subcarriers (English: Tone or Subcarrier), for transmitting an orthogonal frequency division multiplexing (English: Orthogonal Frequency Division Multiplexing, OFDM for short) symbol of data. Except a zero-intermediate-frequency subcarrier, a pilot subcarrier, and a guard subcarrier, all the remaining subcarriers are used to transmit data of one user.

In the next-generation WiFi standard, to improve spectral efficiency, OFDMA is introduced, that is, data of multiple users may be transmitted simultaneously on one OFDM symbol. In addition, to refine granularities of multi-user multiplexing, a bandwidth of 20 M is divided into 256 subcarriers.

An OFDMA system is a multi-carrier modulation system. The OFDMA system has advantages such as high spectral efficiency and a strong anti-multipath-fading capability. A multi-carrier modulated signal is obtained by superposing signals having different frequencies and different amplitudes. Therefore, a multi-carrier modulation system generally has a relatively high peak-to-average power ratio (English: Peak-to-Average Power Radio, PAPR for short).

Generally, because of a saturation feature of an amplifier (that is, when a power of an input signal is greater than a nominal value of the amplifier, non-linear distortion may occur on an output signal), non-linearity caused by the input signal with a relatively high power may cause out-of-band emission and inband distortion. Generally, a power feature of an input signal is defined by using a PAPR because problems such as the foregoing out-of-band emission and inband distortion may be caused when a PAPR of a signal that is input to the amplifier is excessively high.

In the next-generation WiFi system, in order to support OFDMA, 256-point FFT is used in a bandwidth of 20 M, and a maximum supported bandwidth is increased from 20 M to 80 M. As a result, a PAPR problem may worsen, and a specific processing method needs to be considered.

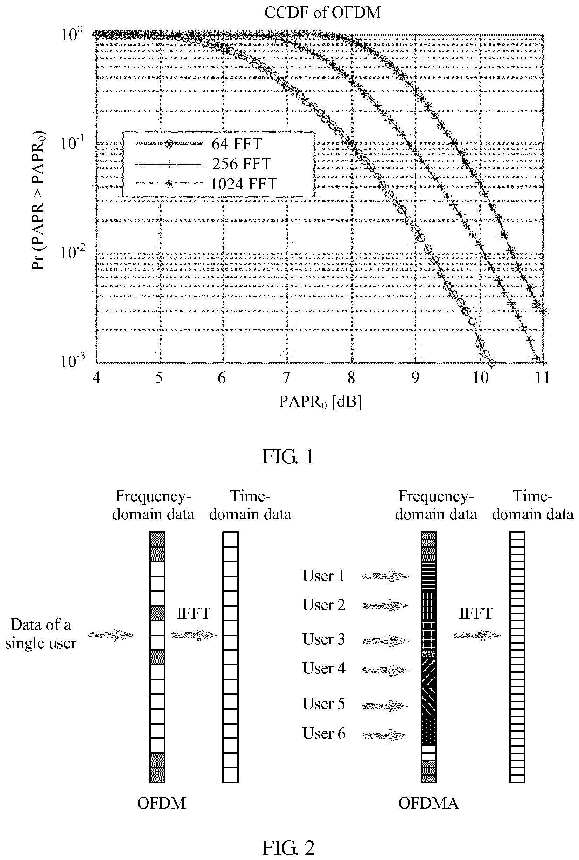

FIG. 1 is an emulation diagram of distribution of PAPR complementary cumulative distribution functions (English: Complementary Cumulative Distribution Function, CCDF for short) that vary according to different quantities of FFT points. For details, refer to PAPR results in FIG. 1, that vary according to quantities of Fast Fourier Transform (English: Fast Fourier Transform, FFT for short) points, where different quantities of FFT points correspond to different total quantities of subcarriers:

64 points are corresponding to the existing bandwidth of 20 M, and indicate PAPR distribution of 64 subcarriers; 256 points are corresponding to the existing bandwidth of 20 M, and indicate PAPR distribution of 256 subcarriers; and 1024 points are corresponding to a bandwidth of 80 M, and indicate PAPR distribution of 1024 subcarriers.

It can be learned from FIG. 1 that, when the bandwidth is 80 M, and there are 1024 subcarriers, the PAPR increases by 2 dB to 3 dB compared to a PAPR of the conventional 64-point FFT. That is, the PAPR is increased, and therefore system performance is affected.

## EP 3 247 079 A1

## SUMMARY

An embodiment of the present invention provides a peak-to-average ratio reduction method, where the method is applied in a Wireless Fidelity WiFi system, and includes:

dividing subcarriers of an orthogonal frequency division multiplexing OFDM symbol that carries to-be-transmitted data, to obtain multiple blocks;
determining multiple phase factors corresponding to the multiple blocks, where the multiple phase factors are used to reduce a peak-to-average ratio of the OFDM symbol;
transmitting the multiple phase factors by using a particular subcarrier of the OFDM symbol; and
multiplying data transmitted on each block in the multiple blocks by a corresponding phase factor, and performing transmission.

An embodiment of the present invention provides a peak-to-average ratio reduction apparatus, where the apparatus is applied in a Wireless Fidelity WiFi system, and includes:

a dividing module, configured to divide subcarriers of an orthogonal frequency division multiplexing OFDM symbol that carries to-be-transmitted data, to obtain multiple blocks;
a determining module, configured to determine multiple phase factors corresponding to the multiple blocks, where the multiple phase factors are used to reduce a peak-to-average ratio of the OFDM symbol; and
a transmission module, configured to: transmit the multiple phase factors by using a particular subcarrier of the OFDM symbol; and multiply each block in the multiple blocks by a corresponding phase factor, and perform transmission.

An embodiment of the present invention provides a peak-to-average ratio reduction device, where the device is applied in a Wireless Fidelity WiFi system, and includes a processor, a memory, a transmitter, and a bus, where: the processor, the memory, and the transmitter transmit data by using the bus, and the memory is configured to store data processed by the processor;
the processor is configured to divide subcarriers of an orthogonal frequency division multiplexing OFDM symbol that carries to-be-transmitted data, to obtain multiple blocks; and determine multiple phase factors corresponding to the multiple blocks, where the multiple phase factors are used to reduce a peak-to-average ratio of the OFDM symbol; and the transmitter is configured to: transmit the multiple phase factors by using a particular subcarrier of the OFDM symbol; and multiply each block in the multiple blocks by a corresponding phase factor, and perform transmission.

An embodiment of the present invention provides a peak-to-average ratio reduction method, where the method is applied in a Wireless Fidelity WiFi system, and includes:

receiving an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor;
obtaining the multiple phase factors according to a signal carried on the particular subcarrier; and
obtaining, according to the phase factors and the multiple blocks, data transmitted on the OFDM symbol.

An embodiment of the present invention provides a peak-to-average ratio reduction apparatus, where the apparatus is applied in a Wireless Fidelity WiFi system, and includes:

a receiving module, configured to receive an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor;
an obtaining module, configured to obtain the multiple phase factors according to a signal carried on the particular subcarrier; and
a restoration module, configured to obtain, according to the phase factors and the multiple blocks, data transmitted on the OFDM symbol.

An embodiment of the present invention provides a peak-to-average ratio reduction device, where the device is applied in a Wireless Fidelity WiFi system, and includes a processor, a memory, a receiver, and a bus, where: the processor, the memory, and the receiver transmit data by using the bus, and the memory is configured to store data processed by the processor;

the receiver is configured to receive an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor; and

the processor is configured to: obtain the multiple phase factors according to a signal carried on the particular subcarrier; and obtain, according to the phase factors and the multiple blocks, data transmitted on the OFDM symbol.

Multiplying each block in the multiple blocks by a corresponding phase factor is to reduce a PAPR of the multiple blocks (or the OFDM symbol). Specifically, each subcarrier that is in each block and carries to-be-transmitted data is multiplied by a phase factor corresponding to the block, and is then transmitted.

Optionally, the particular subcarrier is a reserved subcarrier, and the reserved subcarrier is a reserved subcarrier in the subcarriers of the OFDM symbol. The reserved subcarrier carries phase factor information, and therefore does not need to be multiplied by a phase factor when being transmitted. Further, there are at least two manners of transmitting the phase factors by using the reserved subcarrier: In a first manner, the phase factors are directly transmitted, that is, the phase factors are directly carried on the reserved subcarrier for transmission; in a second manner, the phase factors are converted into the phase factor information and are then transmitted, where the phase factor information may be encoded, modulated, duplicated, or the like.

Optionally, the particular subcarrier is a pilot subcarrier. Further, the transmitting the multiple phase factors by using a particular subcarrier of the OFDM symbol includes: carrying the multiple phase factors on the pilot subcarrier for transmission, where the pilot subcarrier carries a product of a corresponding phase factor in the multiple phase factors and a pilot signal. It should be understood that, when the phase factors are transmitted by using the pilot subcarrier, the phase factors do not need to be converted or modulated; instead, the pilot signal is directly multiplied by a phase factor to be transmitted on the pilot subcarrier, and is then carried on the pilot subcarrier for transmission, where the pilot signal may be transmitted by using some or all pilot subcarriers.

Further, steps performed at a transmit end are corresponding to or similar to steps performed at a receive end. For an OFDM symbol on which PAPR reduction processing is performed and phase factor information carried in the OFDM symbol that are transmitted by a transmit end, the receive end correspondingly restores a phase factor from the OFDM symbol, and then restores, by using the phase factor, data carried on the OFDM symbol.

Further, the embodiments of the present invention are not restricted to processing one OFDM symbol. Multiple OFDM symbols may be processed together according to the method provided in the embodiments of the present invention. For example, subcarriers of two OFDM symbols may be divided together into blocks; and phase factors of the two OFDM symbols may be determined together, and may be carried together on particular subcarriers of the two OFDM symbols for transmission or be transmitted by using a transmission method provided in the present invention. Alternatively, phase factors of the two OFDM symbols may be determined separately, and transmitted together by using the transmission method provided in the present invention. Specifically, the transmission method includes at least the following types: (1) the phase factors are directly transmitted; (2) the phase factors are converted into phase factor information, and the phase factor information is transmitted after being modulated; and (3) the phase factors are converted into phase factor information, and the phase factor information is transmitted after being encoded and modulated; and optionally, modulated data may further be duplicated.

Further, the peak-to-average ratio reduction method provided in the embodiments of the present invention is applicable in a multi-input multi-output (English: Multi-input Multi-output, MIMO for short) system. That is, the method provided in the embodiments of the present invention may be used to transmit an OFDM symbol in each stream in MIMO, and the method provided in the embodiments of the present invention may also be used to transmit multiple OFDM symbols in multiple streams together.

It should be understood that, there may be one or more particular subcarriers; specifically, there may be one or more reserved subcarriers or pilot subcarriers. Whether some or all particular subcarriers are required for transmitting the phase factor (that is, particular subcarriers or a quantity of particular subcarriers) may be flexibly determined according to a transmission reliability requirement or an actual requirement. The following gives an example only, but the present invention is not limited thereto. In addition, in the present invention, particular subcarriers with specific subcarrier sequence numbers are merely examples, and the particular subcarriers are not restricted to specific subcarriers. In actual application, the particular subcarrier may be determined according to an actual situation, or determined according to a location of a reserved subcarrier or a pilot subcarrier in a standard. Any implementation manner in which the method in the present invention is applied to a particular subcarrier falls within the protection scope of the present invention.

It should be understood that, in the present invention, QPSK, QAM, and the like are merely examples of modulation schemes. A specific modulation scheme may be phase shift keying modulation, differential modulation, energy modulation, or another common modulation scheme. This is not limited in the present invention. In the present invention, block coding, BCH coding, and the like are merely examples of coding schemes. A specific coding scheme may further be RS coding, cyclic coding, convolutional coding, Reed-Muller coding, or another common coding scheme. This is not limited in the present invention.

In the embodiments of the present invention, subcarriers of an orthogonal frequency division multiplexing OFDM symbol that carries to-be-transmitted data are divided to obtain multiple blocks; multiple phase factors corresponding to the multiple blocks are determined, where the multiple phase factors are used to reduce a peak-to-average ratio of the OFDM symbol; and the multiple phase factors are transmitted by using a particular subcarrier of the OFDM symbol; and each block in the multiple blocks is multiplied by a corresponding phase factor, and is then transmitted. That is, when the OFDM symbol is used to transmit the data, the particular subcarrier of the OFDM symbol is also used to transmit the phase factors that are used to reduce the peak-to-average ratio of the OFDM symbol. In this way, information required by a receive end for reducing the peak-to-average ratio can be transmitted on one OFDM symbol, so that a PAPR of the OFDM symbol may be reduced while only relatively small adjustment needs to be made and system resource consumption is not increased, thereby improving transmission reliability.

## BRIEF DESCRIPTION OF DRAWINGS

To describe the technical solutions in the embodiments of the present invention more clearly, the following briefly introduces the accompanying drawings required for describing the embodiments or in the prior art. Apparently, the accompanying drawings in the following description show merely some embodiments of the present invention, and a person of ordinary skill in the art may still derive other drawings from these accompanying drawings without creative efforts.

FIG. 1 is an emulation diagram of distribution of PAPR CCDFs that vary according to different quantities of FFT points;
FIG. 2 is a schematic diagram of concepts of OFDM and OFDMA;
FIG. 3 is a schematic diagram of a principle of a PTS;
FIG. 3a is an emulation diagram of distribution of PAPRs obtained after a PTS method is used when a bandwidth is 80 M and there are 1024 subcarriers;
FIG. 4 is a schematic diagram of a technical principle of applying a PTS in an OFDMA system;
FIG. 5 is a schematic diagram of transmission mode 1;
FIG. 6 is a schematic diagram of transmission mode 2;
FIG. 7 is a schematic diagram of transmission mode 3;
FIG. 8 is a schematic diagram of a frame structure in the 802.11 standard;
FIG. 9 is a schematic diagram of a principle of transmitting phase factor information in a WiFi system;
FIG. 10 is a schematic diagram of multiple specific implementation manners of transmitting phase factor information;
FIG. 10a is a schematic diagram of distribution of reserved subcarriers in a frequency domain;
FIG. 10b is a schematic diagram of a manner of dividing 1024 subcarriers in 802.11ax;
FIG. 11a is an emulation diagram of distribution of PAPR CCDFs in an 802.11ad system;

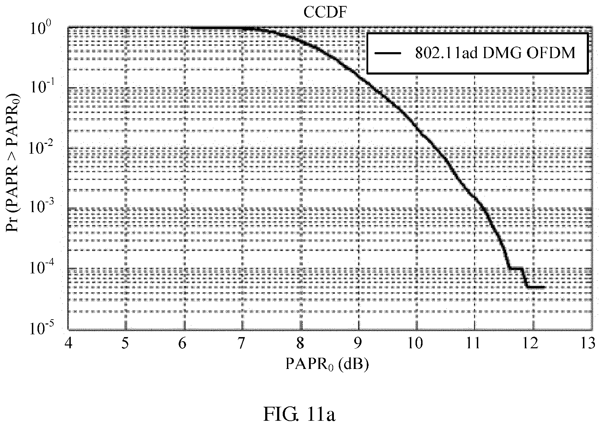

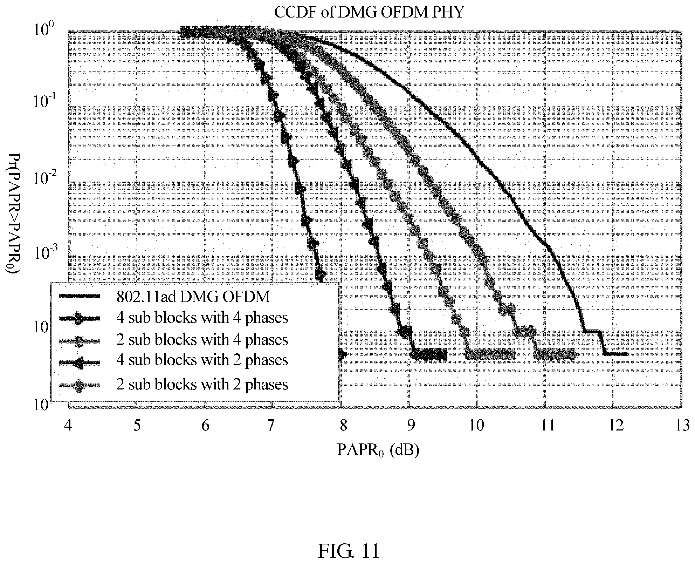

FIG. 11 is an emulation diagram of reduced PAPRs according to an embodiment of the present invention;

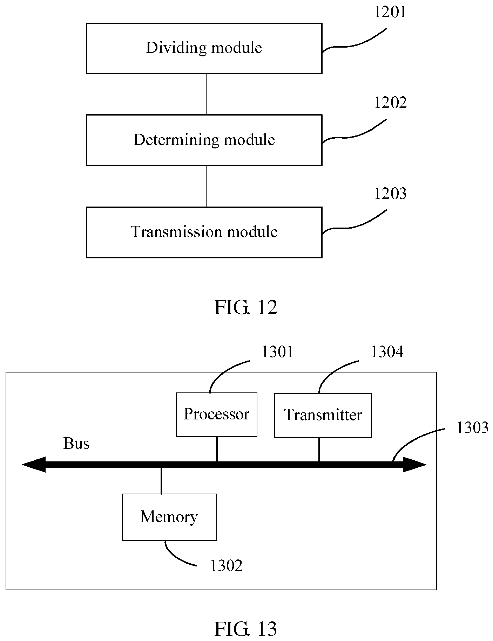

FIG. 12 is a schematic diagram of a peak-to-average ratio reduction apparatus according to an embodiment of the present invention;
FIG. 13 is a schematic diagram of a peak-to-average ratio reduction device according to an embodiment of the present invention;

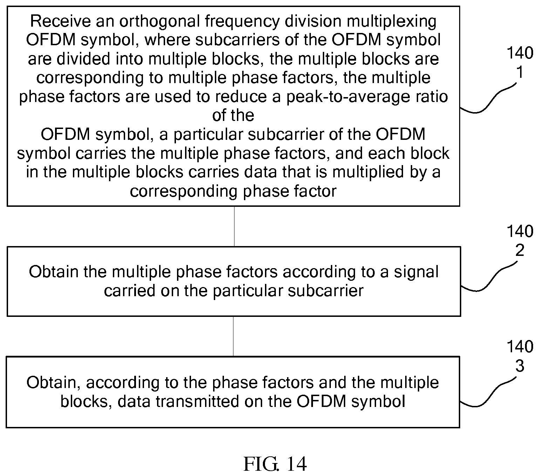

FIG. 14 is a schematic diagram of another peak-to-average ratio reduction method according to an embodiment of the present invention;

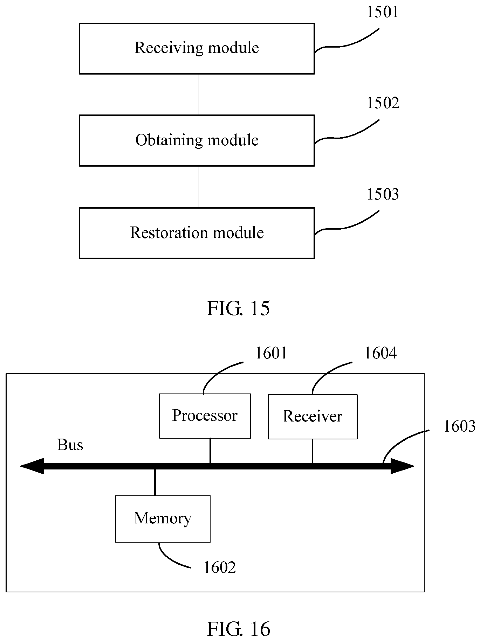

FIG. 15 is a schematic diagram of another peak-to-average ratio reduction apparatus according to an embodiment of the present invention; and
FIG. 16 is a schematic diagram of another peak-to-average ratio reduction device according to an embodiment of the present invention.

## DESCRIPTION OF EMBODIMENTS

To resolve a problem that a PAPR is relatively high in a next-generation WiFi system, embodiments of the present invention provide a peak-to-average ratio reduction method and apparatus. That is, phase factors are transmitted by using a particular subcarrier of an OFDM symbol, and another subcarrier block that transmits data is multiplied by a corresponding phase factor. In this case, a transmit end selects a proper phase factor, so that a PAPR of a subcarrier that transmits data is minimized; and a receive end may complete data restoration by using the received phase factors (or phase factor information) in the particular subcarrier, thereby reducing a peak-to-average ratio of the system. Specifically, in the embodiments of the present invention, the particular subcarrier may be a reserved subcarrier or a pilot subcarrier.

## About an Execution Body

In the embodiments of the present invention, the peak-to-average ratio reduction method provided in the embodiments of the present invention may be performed by a station, an access point, a terminal, or a network node, which is not limited. Specifically, the access point (AP for short, English: Access Point) in the embodiments of the present invention is also referred to as a wireless access point or a hotspot. Specifically, the AP may be a terminal device or network device that has a WiFi chip. Optionally, the AP may be a device that supports the 802.11ax standard. Further, optionally, the AP may be a device that supports multiple WLAN (English: Wireless Local Area Network) standards, such as 802.11ac, 802.11n, 802.11g, 802.11b, and 802.11a. Specifically, the station (STA for short, English: Station) in the embodiments of the present invention may be a wireless communications chip, a wireless sensor, or a wireless communications terminal, for example, a mobile phone that supports a WiFi communication function, a tablet computer that supports a WiFi communication function, a set top box that supports a WiFi communication function, and a computer that supports a WiFi communication function. Optionally, the station may support the 802.11ax standard. Further, optionally, the station supports multiple WLAN standards, such as 802.11ac, 802.11n, 802.11g, 802.11b, and 802.11a.

## About OFDM, OFDMA, and an Reserved Subcarrier

FIG. 2 is a schematic diagram of concepts of OFDM and OFDMA. As shown in FIG. 2, each grid of a frequency-domain data part represents data carried on one subcarrier. For the OFDM, all subcarriers, except a zero intermediate frequency (the zero intermediate frequency is corresponding to a direct current signal, and no data is transmitted on the zero intermediate frequency), a pilot subcarrier, and a guard subcarrier that are displayed in gray, on the left half in FIG. 2 are used to transmit data of one user. That is, all the white grids of in the frequency-domain data may be used to transmit data of a single user, and then IFFT is performed on frequency-domain data, to obtain time-domain data.

For the OFDMA, other subcarriers, except a zero intermediate frequency and a guard subcarrier that are displayed in gray, on the right half in FIG. 2 are divided into N subbands (English: band), which are also referred to as resource units (English: Resource Unit, RU for short). Different subbands are used to transmit data of different users, where the subbands each include a pilot subcarrier. That is, subcarriers of a frequency-domain data part may be allocated to different users for transmitting data. For example, a subband consisting of subcarriers indicated by a horizontal-line fill pattern is used to transmit data of a user 1, and a subband consisting of subcarriers by a vertical-line fill pattern is used to transmit data of a user 2; and then, IFFT is performed on frequency-domain data, to obtain time-domain data.

In an existing WiFi system, input data is divided into blocks for OFDMA transmission. However, each data block (that is, a data block of a corresponding user) is carried on a subband for transmission. There are two different subband dividing manners, and a difference lies in a subband granularity, where the subband granularity is corresponding to a data block granularity. Dividing data into blocks herein is different from dividing corresponding phase factors into blocks in the following. The dividing data into blocks herein is performed for multiple users, where each subband may transmit data of one user. Therefore, a size of a data block on a subband needs to match the subband.

A first subband dividing manner - Each subband occupies 26 subcarriers. Correspondingly, each data block also occupies 26 subcarriers. The subband dividing manner is specifically as follows:

In a bandwidth of 20 M, 256-point FFT transform is used, where 26 subcarriers are grouped as one data subband. Subband division is as follows:

quantities of guard subcarriers on two sides are separately 5 and 6, that is, 11 subcarriers are used as a guard band; no signal is transmitted on a subcarrier corresponding to a zero intermediate frequency;

26 subcarriers are grouped as one subband, and there are a total of 9 subbands; and apart from the foregoing occupied subcarriers, currently, a total of 10 subcarriers are not used.

Even further, in a bandwidth of 80 M, 1024-point FFT transform is used, where the bandwidth is divided into 1024 subcarriers. A subcarrier allocation manner is as follows:

quantities of guard subcarriers on two sides are separately 5 and 6, that is, 11 subcarriers are used as a guard band, and no data is transmitted on the subcarriers; no data is transmitted on a subcarrier corresponding to a zero intermediate frequency;

26 subcarriers are grouped as one subband, and there are a total of 38 subbands; and

apart from the foregoing occupied subcarriers, a total of 24 subcarriers are not used.

A second subband dividing manner - Each subband occupies 52 subcarriers. Correspondingly, each data block also occupies 52 subcarriers. The subband dividing manner is specifically as follows:

In a bandwidth of 20 M, 256-point FFT transform is used, where 52 subcarriers are grouped as one subband. Subband division is as follows:

quantities of guard subcarriers on two sides are separately 5 and 6, that is, 11 subcarriers are used as a guard band;
no signal is transmitted on a subcarrier corresponding to a zero intermediate frequency;

52 subcarriers are grouped as one subband, and there are a total of 4 subbands; and
apart from the foregoing occupied subcarriers, currently, a total of 36 subcarriers are not used.

Even further, in a bandwidth of 80 M, 1024-point FFT transform is used, where the bandwidth is divided into 1024 subcarriers. A subcarrier allocation manner is as follows:

quantities of guard subcarriers on two sides are separately 5 and 6, that is, 11 subcarriers are used as a guard band, and no data is transmitted on the subcarriers;
no data is transmitted on a subcarrier corresponding to a zero intermediate frequency;

52 subcarriers are grouped as one subband, and there are a total of 19 subbands; and
apart from the foregoing occupied subcarriers, currently, a total of 24 subcarriers are not used.

For ease of description, the unused subcarriers are referred to as reserved subcarriers (English: Reserved Tone), may also be referred to as retention subcarriers, and may further be referred to as left subcarriers (English: Left Tone). For example, in the first dividing manner and the second dividing manner, 24 subcarriers are not used. Because the reserved subcarriers are not used to transmit data, the reserved subcarriers may be used to transmit phase factors that are used to reduce a peak-to-average ratio of a current OFDM symbol.

Specifically, in the 802.11ax standard, 26 subcarriers are used as a basic scheduling unit, and may be referred to as a subband or a resource unit. The following separately describes designs for a bandwidth of 20 M, a bandwidth of 40 M, and a bandwidth of 80 M:

For the bandwidth of 20 M:

the bandwidth of 20 M is divided into 256 subcarriers, and 26 subcarriers are grouped as one subband for transmitting data, and a subcarrier allocation manner is as follows:

there are a total of 9 subbands, and 234 subcarriers are occupied;
quantities of guard subcarriers on two sides are separately 5 and 6, that is, 11 subcarriers are used as a guard band, and no data is transmitted on the subcarriers;
three subcarriers, that is, subcarriers 0 and $\pm 1$, are used as zero intermediate frequencies, and no data is transmitted on the subcarriers; and
the remaining 8 subcarriers are not used.

For the bandwidth of 40 M:

the bandwidth of 40 M is divided into 512 subcarriers, and correspondingly, a subcarrier allocation manner is as follows:

quantities of guard subcarriers on two sides are separately 12 and 11, that is, 23 subcarriers are used as a guard band, and no data is transmitted on the subcarriers;
five subcarriers, that is, subcarriers 0, $\pm 1$, and $\pm 2$, are used as zero intermediate frequencies, and no data is transmitted on the subcarriers; and
18 subbands are used to transmit data, and a total of 468 reserved subcarriers are occupied; and
a total of 16 reserved subcarriers are not used.

For the bandwidth of 80 M:

the bandwidth of 80 M is divided into 1024 subcarriers, and correspondingly, a subcarrier allocation manner is as follows:

quantities of guard subcarriers on two sides are separately 13 and 12, that is, 25 subcarriers are used as a guard band, and no data is transmitted on the subcarriers;

five subcarriers, that is, subcarriers 0, $\pm 1$, and $\pm 2$, are used as zero intermediate frequencies, and no data is transmitted on the subcarriers;

a total of 37 subbands are used to transmit data, and a total of 926 subcarriers are occupied; and

the remaining 32 reserved subcarriers are not used.

**About a PAPR Reduction Method and a Phase Factor**

In comparison with a single-carrier system, a PAPR of a time-domain signal in an OFDM or OFDMA system is much higher. This causes a lot of problems, for example, efficiency of a power amplifier of a transmitter is reduced, and signal-to-quantization-noise ratios of a digital-to-analog converter and an analog-to-digital converter are reduced, which is one of most adverse factors of the OFDM or OFDMA system. Therefore, the OFDM or OFDMA system usually requires that specific processing be performed to reduce the PAPR. Commonly used methods in a product include technologies such as pre-distortion and clipping.

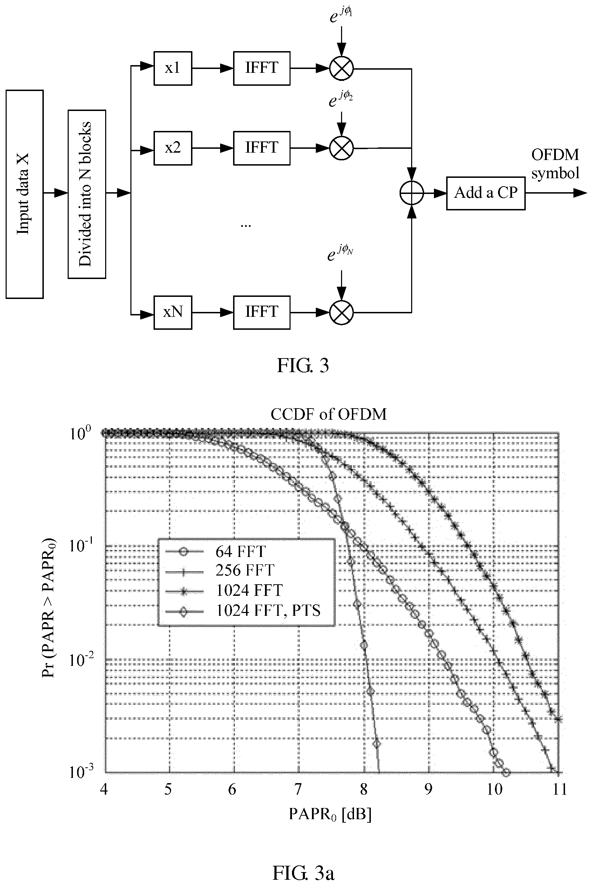

A partial transmit sequence (English: Partial Transmit Sequence, PTS for short) is one of many PAPR cancellation methods. FIG. 3 is a schematic diagram of a principle of the PTS. As shown in FIG. 3:

input data X is divided into N blocks: x1, x2, ..., xN;

inverse fast Fourier transform (English: Inverse Fast Fourier Transform, IFFT for short) is separately performed on the foregoing N blocks;

the foregoing N blocks are separately multiplied by a phase factor, and are then added, where the phase factors are $e^{j\phi_1}$, $e^{j\phi_2}$, ..., $e^{j\phi_N}$;

a cyclic prefix (English: Cyclic Prefix, CP for short) is added to a symbol obtained by means of addition, to obtain an OFDM symbol.

A PAPR of the output OFDM symbol is minimized by selecting the phase factor corresponding to each block. Therefore, in order that the PTS is used to reduce the PAPR, it is required to determine the phase factors and transmit phase factor information (the phase factors need to be converted into the phase factor information), so that a receiving party restores data by using the received phase factor information.

Specifically, PTS processing at a transmit end is described below:

A quantity of subcarriers in an OFDM symbol is N, and a sequence consisting of all data mapped to the subcarriers is $x(n)$, where $n$ = 0, 1, ..., N-1;

the sequence $x(n)$ is divided into M disjoint sub-blocks, where a length of each sub-block is L, N = ML, and both M and L are natural numbers greater than 1 and less than N:

$$x_m(n) = \left\{ \begin{array}{ll} x(n) & , \quad (m-1)L \le n \le mL - 1 \\ 0 & , \quad others \end{array} \right. , m = 1, 2, \cdots, M, n = 0, 1, \cdots, N-1$$

IFFT is performed on $x_m(n)$ to obtain $y_m(n) = \mathbf{IFFT}(x_m(n))$.

$$y(n) = \sum_{m=1}^{M} \left( e^{j\phi_m} y_m(n) \right)$$

where $y(n)$ is a signal transmitted in a time domain, and $e^{j\phi_m}$ is a phase factor; and a proper phase $\phi_m$ is selected,

so that a peak-to-average ratio of $y(n)$ is minimized, that is, $\min_{\phi_m} \mathrm{PAPR}(y(n))$; and

the PAPR of the sequence $y(n)$ is defined as: **PAPR** $(y(n)) = \frac{\max|y(n)|^2}{mean|y(n)|^2}$, that is, a ratio of a maximum power to a mean power.

As described above, selection or determining of the phase $\phi_m$ is a core of the PTS algorithm. The selection or determining of the phase $\phi_m$ is described by using the following two typical algorithms as examples. For ease of description, it is assumed that a quantity of blocks is 4, that is, $M = 4$.

Typical algorithm 1:

Step 1: Assume that a phase signal corresponding to a block 1 is 1, a phase signal corresponding to a block 2 is j, a phase signal corresponding to a block 3 is $e^{j\phi}$, and a phase signal corresponding to a block 4 is $e^{-j\phi}$.

Step 2: Search in a value range, from 0 to $\pi$, of $\phi$ by using 1 degree as a step, to obtain a minimum PAPR:

$$\min_{\phi \in (0,\pi)} \mathrm{PAPR}(y_1(n) + j * y_2(n) + e^{j\phi} y_3(n) + e^{-j\phi} y_4(n))$$

Typical algorithm 2:

Step 1: Assume that a phase factor of each block is $e^{j\phi_m}$, where $m = 1,2,3,4$, and obtain a value of $\phi_m$ from a set $\Phi = \{0, \frac{\pi}{2}, \pi, \frac{3\pi}{2}\}$, where, alternatively, $\Phi$ may be a set of another four phases, for example, $\{\frac{\pi}{4}, \frac{3\pi}{4}, \frac{5\pi}{4}, \frac{7\pi}{4}\}$.

Step 2: Traverse various combinations, to obtain an optimal PAPR result, that is, a result that a PAPR is minimized:

$$\min_{\phi_m \in \Phi, m=1,2,3,4} \sum_{m=1}^{4} e^{j\phi_m} y_m(n)$$

Specific design of a WiFi standard in the following is based on this method. That is, description is given by using an example in which the value of $\phi_m$ is obtained from the set $\Phi = \{0, \frac{\pi}{2}, \pi, \frac{3\pi}{2}\}$, that is, a value of $e^{j\phi_m}$ is obtained from a set $\{1, j, -1, -j\}$ or $\{e^{j*0\pi}, e^{j*\frac{\pi}{2}}, e^{j*\pi}, e^{j*\frac{3\pi}{2}}\}$.

After PTS processing is performed, processing at a receive end is as follows:

It is assumed that the receive end knows or has obtained phase factor information corresponding to each block after the PTS processing. Specific processing is as follows:

Data on an OFDM symbol is separately multiplied, in a unit of block, by a conjugate of a corresponding phase factor:

$$\hat{y}(n) = e^{-j\phi_m} y(n), (m-1)L \le n \le mL - 1, m = 1, \cdots, M, n = 0, \cdots, N - 1$$

where $y(n)$ is corresponding to a sequence consisting of the data on the OFDM symbol that has N subcarriers; and $\hat{y}(n)$ is processed in a normal signal processing manner, that is, in a manner that is the same as a processing procedure when the PTS method is not used.

It can be learned from the processing at the receive end that the phase factor information needs to be transmitted, so that the receive end may perform further processing and a PAPR of the OFDM symbol is reduced.

Further, determining multiple phase factors of the multiple blocks include: obtaining values of the multiple phase factors from a finite set, so that a PAPR obtained after the multiple blocks are multiplied by the multiple phase factors is minimized. The finite set may be $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$, or another similar or simply transformed set.

It should be noted that, a phase factor in the embodiments of the present invention may also be referred to as a phase shift factor, a weighting factor, a weighting coefficient, or the like. The factor represents a coefficient that is selected for reducing a PAPR when a PTS is applied. The factor may be represented in a form of a phase, or in a form of another complex number, real number, or the like. This is not limited in the embodiments of the present invention.

The PTS method may effectively reduce a PAPR of a transmit signal. FIG. 3a is an emulation diagram of distribution of PAPRs obtained after the PTS method is used when a bandwidth is 80 M and there are 1024 subcarriers. As shown in FIG. 3a, after the PTS method is used, a PAPR of an OFDM signal having 1024 subcarriers and a PAPR of an OFDM signal having 64 subcarriers intersect. Therefore, the PTS method may effectively alleviate a problem that a PAPR increases as a quantity of subcarriers increases.

However, there is a big barrier in actual application of a PTS technology, which affects application of the PTS technology in an actual system. In the actual system, data carried on each OFDM symbol is unique. Therefore, after the PTS algorithm is used, phase factors corresponding to different OFDM symbols are also different. However, if the receive end does not know the phase factor corresponding to each OFDM symbol, the receive end cannot restore an original signal on which PTS processing has not been performed, and therefore cannot demodulate the signal correctly. If the phase factor corresponding to each OFDM symbol needs to be transmitted, a relatively high bandwidth needs to be occupied, thereby affecting system transmission efficiency. Application of the PTS algorithm in the actual system is restricted due to this factor.

A next-generation WiFi system needs to support an application scenario in which a bandwidth of 80 M is divided into 1024 subcarriers. As a result, a PAPR of the system is increased, thereby affecting system performance. The foregoing problem that the PAPR is increased may be resolved by using the PTS algorithm. However, how to transmit phase factor information to a receiver without requiring additional bandwidth is an issue that needs to be addressed.

Further, for the foregoing case, the present invention provides a method for transmitting, by using a particular subcarrier, phase factors to a receive end without requiring additional bandwidth, so that a PTS is actually applied to resolve a PAPR problem.

**About Application of a PAPR Reduction Method in a WiFi System**

In a next-generation WiFi system, a PTS technology may be applied to reduce a PAPR of the system. A specific process is described below.

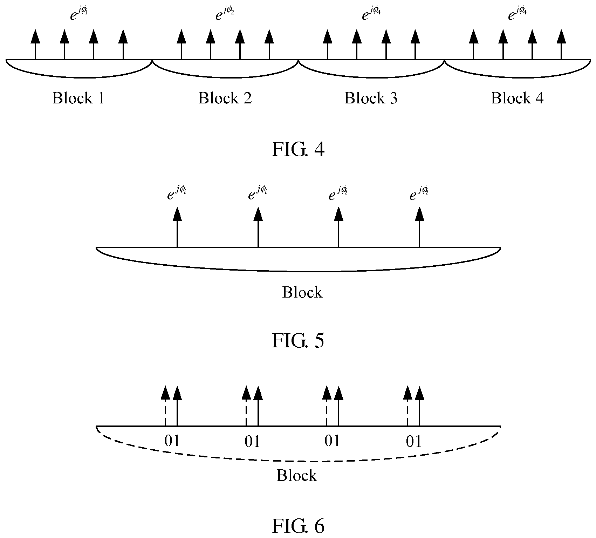

FIG. 4 is a schematic diagram of a technical principle of applying a PTS in an OFDMA system. As shown in FIG. 4, each up arrow represents one subcarrier. In the figure, only 16 arrows are drawn. This is merely an illustration, and there may be more or less subcarriers an actual situation, which is not limited in the embodiments of the present invention. For example, in a WiFi system, every 20 M may be divided into 64 subcarriers or 256 subcarriers.

It is assumed that, in FIG. 4, a bandwidth of an OFDM symbol is 80 M, there are a total of 1024 subcarriers, 20 M corresponds to one transport block, and there are a total of 4 blocks. Subcarriers in an OFDM symbol are divided into multiple transport blocks. Specifically, a bandwidth of 80 M is divided into 1024 subcarriers. Sequence numbers of the subcarriers start from 0, and sequentially increase starting from low-frequency subcarriers to high-frequency subcarriers. For example, in FIG. 4, a leftmost subcarrier is subcarrier 0, which is sequentially followed by subcarrier 1, subcarrier 2, and so on, on the right, and a rightmost subcarrier is subcarrier 1023. A first transport block includes subcarriers 0 to 255, such as a block 1 in FIG. 4; a second transport block includes subcarriers 256 to 511, such as a block 2 in FIG. 4; a third transport block includes subcarriers 512 to 767, such as a block 3 in FIG. 4; and a fourth transport block includes subcarriers 768 to 1023, such as a block 4 in FIG. 4. It should be noted that, the 1024 subcarriers may also be numbered from -511 to 512. In this case, a subcarrier whose sequence number is 0 is exactly a zero intermediate frequency.

A phase factor corresponding to each block is determined according to a specific algorithm (for example, the two typical algorithms provided in the foregoing description), so that a corresponding PAPR is minimized. For example,

$$\{e^{j*0}, e^{j*\frac{\pi}{2}}, e^{j*\pi}, e^{j*\frac{3\pi}{2}}\}$$

values of the phase factors are obtained from a finite set. The finite set may be $\quad$. Phase factor information is transmitted, so that a receiving party restores data by using the received phase factor information. Specific processing is as follows:

all subcarriers, in each transport block, used to transmit data is multiplied by the phase factor corresponding to the transport block; for example, in FIG. 4, subcarriers in the block 1 are multiplied by a phase factor $e^{j\phi_1}$ corresponding to the block 1, subcarriers in the block 2 are multiplied by a phase factor $e^{j\phi_2}$ corresponding to the block 2, subcarriers in the block 3 are multiplied by a phase factor $e^{j\phi_3}$ corresponding to the block 3, and subcarriers in the block 4 are multiplied by a phase factor $e^{j\phi_4}$ corresponding to the block 4;

phase shifting is not performed on a pilot subcarrier, that is, the pilot subcarrier is not multiplied by a phase factor; and phase factor information is transmitted on a reserved subcarrier, where phase factor information of each transport block is transmitted on a reserved subcarrier of the transport block.

Correspondingly, processing by a receiver is as follows:

First, a phase factor carried on a reserved subcarrier of each transport block is obtained, where a specific obtaining method is related to a manner of transmitting phase factor information, that is, an obtaining manner corresponding to a manner of transmitting the phase factor information on the reserved subcarrier is applied; for example, when the phase factor information is transmitted on the reserved subcarrier in a QAM manner, the corresponding phase factor information is obtained in a QAM demodulation manner;

a subcarrier signal, of each transport block, for transmitting data is multiplied by a conjugate of the phase factor to eliminate an impact of phase shifting; and

other procedures may be implemented by referring to the prior art.

Specifically, a processing procedure at a transmit end is as follows:

Data that is input to an OFDM symbol and mapped to subcarriers are divided into multiple sub-blocks. Specifically, a sequence consisting of data mapped to 1024 subcarriers in a bandwidth of 80 M is $n = 0, 1, \cdots, N - 1$, where $N = 1024$, and n is corresponding to subcarrier sequence numbers. A corresponding bearer signal on a reserved subcarrier is 0 or a random signal. That is, the reserved subcarrier is not occupied or is not used to transmit data, and $x(n)$ corresponding to the reserved subcarrier is 0 or a random signal. $x(n)$ is divided into four sub-blocks, which are $x_m(n)$, where

$$x_m(n) = \begin{cases} x(n) & , \quad (m-1)L \le n \le mL - 1 \\ 0 & , \quad others \end{cases}, m = 1, 2, \cdots, M, n = 0, 1, \cdots, N - 1 \tag{1}$$

where M = 4, and L = 256.

Subsequent processing is slightly different from what is described above due to an intrinsic characteristic of the WiFi system.

(1) IFFT is performed on $x_m(n)$, to obtain $y_m(n) = \textbf{IFFT}(x_m(n))$.

(2) A proper phase $\phi_m$ is selected to obtain a $\min_{\phi_m} \text{PAPR}(y(n))$ that minimizes a peak-to-average ratio of $y(n)$. For phase selection, refer to the foregoing description.

(3) Phase factor information to be transmitted on the reserved subcarrier is generated by means of encoding and modulation according to the phase $\phi_m$ obtained in (2).

(4) $x(n)$ is regenerated, where a corresponding location on the reserved subcarrier is replaced by the phase factor information obtained in (3).

Specifically, $x(n)$ is regenerated, where: $n = 0, 1, \cdots, N - 1$, $N = 1024$, and $n$ is corresponding to the subcarrier sequence numbers; and the corresponding bearer signal on the reserved subcarrier is replaced by the phase factor information generated in (3), that is, corresponding $x(n)$ on the reserved subcarrier is no longer 0 or a random signal, but becomes the phase factor information obtained in (3).

(5) A signal in each block is multiplied by a corresponding phase factor: when information transmitted on a subcarrier n is not pilot information or phase factor information, $\hat{x}_m(n) = e^{j\phi_m}x_m(n)$; or when information transmitted on a subcarrier n is pilot information or phase factor information, $\hat{x}_m(n) = x_m(n)$.

It should be noted that, $\hat{x}_m(n)$ herein is obtained based on $x(n)$ generated in (4) and according to formula (1); that is, in $x_m(n)$, $x(n)$ corresponding to a reserved subcarrier is also replaced by the phase factor information obtained in (3).

(6) $\hat{x}(n) = \sum_{m=1}^{4} \hat{x}_m(n)$ is transmitted as a transmit signal according to the foregoing result.

Correspondingly, processing by a receive end is as follows:

(1) An OFDM symbol is received, where a sequence consisting of signals carried on all subcarriers of the OFDM symbol is $y(n)$, $n = 0, 1, \cdots, N - 1$, and n is corresponding to subcarrier sequence numbers.

(2) Phase factor information carried on a reserved subcarrier is demodulated, to obtain a corresponding phase $\phi_m$

on each block, where *m* = 1, 2, 3, 4.

(3) The following processing is performed on *y*(*n*) to eliminate an impact of phase factors:

when information transmitted on a subcarrier n is not pilot information or phase factor information: $\hat{y}(n) = y(n)e^{-j\phi m}$, (*m* - 1) * $L \leq n \leq mL$ - 1; or

when information transmitted on a subcarrier n is pilot information or phase factor information: y(n) = y(n), (m - 1) * L ≤ n ≤ m * L - 1.

(4) Processing on $\hat{y}(n)$ is performed according to a normal processing procedure.

**About a Phase Factor Transmission Mode**

The following describes phase factor transmission modes in the present invention. Specifically, the following three transmission methods can be used to transmit a phase factor on a reserved subcarrier of each transport block:

Transmission mode 1 - a manner in which a phase factor is directly transmitted:

A phase factor or a phase factor of each transport block is directly transmitted on a reserved subcarrier of the transport block. To ensure reliability, a same phase factor may be repeatedly transmitted on multiple reserved subcarriers. Generally, transmitting a same phase factor on three or four reserved subcarriers may provide sufficient transmission reliability.

During receiving, the phase factor corresponding to each transport block is first restored by using channel information, and a subcarrier signal, of each transport block, for transmitting data is multiplied by a conjugate of the phase factor to eliminate an impact of the phase factor.

FIG. 5 is a schematic diagram of transmission mode 1. As shown in FIG. 5, four non-consecutive reserved subcarriers on a certain transport block are all used to transmit a phase factor $e^{j\phi i}$ corresponding to the transport block. The non-consecutive reserved subcarriers are selected to avoid an impact of frequency selective fading. Similarly, in the following two manners, a non-consecutive reserved subcarrier is also used to avoid an impact of frequency selective fading. FIG. 5 illustrates only reserved subcarriers for transmitting phase factors. Distribution and a quantity of other subcarriers are not limited in the embodiments of the present invention. In addition, FIG. 5 shows a transmission mode for a certain transport block. If there are multiple transport blocks, for example, in FIG. 4, or if there are a different quantity of transport blocks, a transmission mode may be obtained in a similar way by referring to FIG. 5. In addition, transmission mode 2 and transmission mode 3 are also for a certain transport block. If there are multiple transport blocks or if there are a different quantity of transport blocks, a transmission mode may be obtained in a similar way by referring to a corresponding transmission mode. Details are not described herein again.

Transmission mode 2 - energy modulation manner:

FIG. 6 is a schematic diagram of transmission mode 2. As shown in FIG. 6, in transmission mode 2, an energy modulation (or energy detection) scheme is used, and a phase factor is encoded, based on energy detection, for transmission. Specifically, when no signal is transmitted on a reserved subcarrier, the reserved subcarrier is corresponding to bit 0 (or bit 1), and when a signal is transmitted on a reserved subcarrier, the reserved subcarrier is corresponding to bit 1 (or bit 0). During receiving, when signal energy detected on a reserved subcarrier is greater than a preset threshold, bit 1 (or bit 0) is obtained; otherwise, bit 0 (or bit 1) is obtained.

For example, when a PTS is used to reduce a peak-to-average ratio, there are four phase factors, which are $e^{j\phi 1}$, $e^{j\phi 2}$, $e^{j\phi 3}$, and, respectively, and are encoded by using the following scheme: Two bits are used for encoding, and encoded phase factors are (00, $e^{j\phi 1}$), (01, ), (10, $e^{j\phi 3}$), and (11, $e^{j\phi 4}$), respectively.

As shown in FIG. 6, one subcarrier of two subcarriers on the transport block is not used to transmit a signal, and the other subcarrier is used to transmit a signal. Then, a corresponding code is 01, a corresponding phase factor is $e^{j\phi 2}$, and a corresponding energy signal transmitted is 01. Likewise, to avoid frequency selective fading, four groups of reserved subcarriers, that is, eight reserved subcarriers, are used to transmit a same signal.

Transmission mode 3 - differential modulation manner:

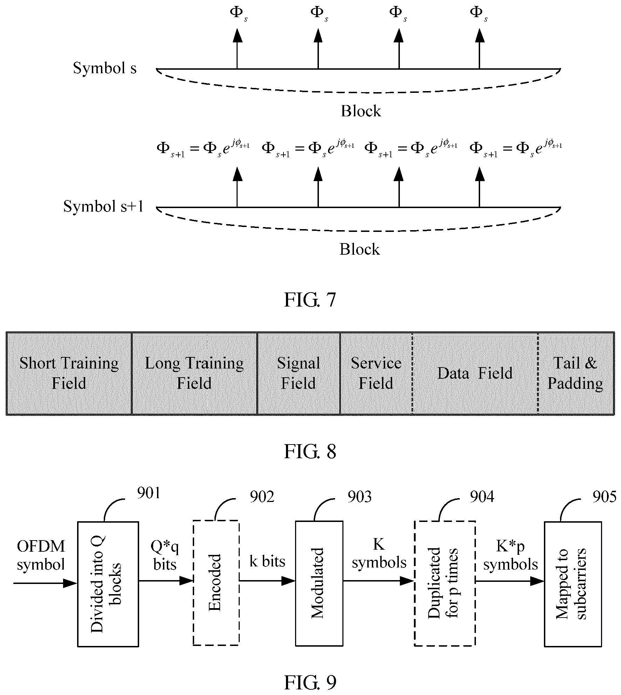

FIG. 7 is a schematic diagram of transmission mode 3. As shown in FIG. 7, in transmission mode 3, a differential modulation method is used. A phase factor corresponding to each transport block is carried by using a phase difference between same subcarriers on adjacent symbols.

Specifically, it is assumed that a phase factor, of a signal in a certain transport block, on an sth symbol is $e^{j\phi s}$,

and corresponding phase information on a reserved subcarrier is $\Phi_s$. A pilot signal carried on a reserved subcarrier of a first OFDM symbol is $\Phi_1 = p$, a pilot signal carried on a reserved subcarrier of a second OFDM symbol is $\Phi_2 = \Phi_1 e^{j\phi_2}$, a pilot signal carried on a reserved subcarrier of a third OFDM symbol is $\Phi_3 = \Phi_2 e^{j\phi_2}$, and so on, where $\Phi_{s+1} = \Phi_s e^{j\phi_{s+1}}$, and s is a positive integer. Differential modulation is performed on other subcarriers in a similar manner, except that location limitation information corresponding to subcarriers on the first OFDM symbol may be different. In addition, in a next-generation WiFi standard, the last long training field (English: Long Training Field, LTF for short) or short training field (English: Short Training Field, STF for short) may be used as the first OFDM symbol, that is, a reference signal. In addition, alternatively, the first OFDM data symbol used for transmission may be used as the first OFDM symbol. This symbol is not processed by using the peak-to-average ratio reduction method according to the present invention. A fixed pilot signal is transmitted on a corresponding reserved subcarrier, for example, all signals transmitted on the reserved subcarrier are 1.

Another implementation manner of differential modulation is transmitting a corresponding phase factor on two adjacent subcarriers. Specifically, it is assumed that a phase factor, of a signal in a certain transport block, on the $s^{th}$ symbol is $e^{j\phi_s}$, sequence numbers of two adjacent reserved subcarriers are k and k+1, respectively, and pilot signals transmitted on the reserved subcarriers are $p_k$ and $p_k e^{j\phi_s}$, where $p_k$ is a known pilot signal.

Optionally, based on the foregoing three transmission modes, to further improve transmission reliability, encoding may be further introduced. That is, a to-be-transmitted phase factor (or phase factor information converted from a phase factor) is first encoded, and is then transmitted by using the foregoing three transmission modes.

For example, using four transport blocks as an example, it is assumed that four corresponding phase factors are selectable for each transport block. There are a total of 4^4=2^8=256 possible options. Correspondingly, 8 bits need to be transmitted, (16, 8) block coding may be used for encoding, to output 16 bits, where (16, 8) block coding represents that there are 8 bits of input information, and a length of a code block is 16 bits. DQPSK/QPSK modulation is performed on encoded data, and eight reserved subcarriers need to be occupied for transmission. Further, if 24 reserved subcarriers are available, DQPSK/QPSK modulated data may be duplicated for three times, and then mapped to the 24 reserved subcarriers for transmission.

It should be understood that, DQPSK in the embodiments of the present invention is only one of differential modulation schemes. Alternatively, another differential modulation scheme may be used. Likewise, QPSK is also only one modulation scheme. Alternatively, another modulation scheme may be used, for example, QAM.

By means of encoding or duplication, transmission reliability may be further improved and channel resources may be fully utilized.

Optionally, in the foregoing transmission modes, a phase factor of each transport block is transmitted on a reserved subcarrier in the transport block. However, alternatively, phase factors of all transport blocks may be transmitted by using some or all reserved subcarriers. That is, a transport block whose phase factor is to be transmitted on a reserved subcarrier is not limited, and a specific implementation method may be learned by referring to the foregoing transmission modes.

**About Signaling Modification**

Further, for the purpose of applying this technology in a WiFi system, a transmit end needs to notify a receive end whether the PAPR reduction method provided in the present invention is used and notify the receive end of a quantity of blocks obtained by means of division by using this method. This requires that signaling design in a WiFi protocol be modified, for example, adding an extra indication bit or reusing a bit in an existing field. FIG. 8 is a schematic diagram of a frame structure in the 802.11 standard. As shown in FIG. 8, related description of each field is as follows:

Short training field (English: Short Training Field, STF for short): used by a receiver to synchronize received signals, including synchronizing symbols and synchronizing frequency;

long training field (English: Long Training Field, LTF for short): used by a receiver to perform channel estimation, to obtain channel information;

signaling field (English: Signal Field)/service field (English: Service Field): used to carry control signaling, including basic information such as a modulation and coding scheme;

data field (English: Data Field): carries transmitted channel information; and

tail and padding (English: Tail & Padding): used to pad a tail bit, so that an amount of transmitted signal data is an integral multiple of an amount of data carried on an OFDM symbol.

If an extra bit is added to indicate whether the peak-to-average ratio reduction method according to the present invention, the signaling field/service field in the frame structure needs to be modified. A specific method may be adding 1 bit to this field. When this bit is a first value, the PTS technology provided in the embodiments of the present invention is used; or when this bit is a second value, the PAPR reduction method provided in the embodiments of the present invention is not used. For example, when this bit is 1, the PAPR reduction method provided in the embodiments of the present invention is used; or when this bit is 0, the PAPR reduction method provided in the embodiments of the present invention is not used. In addition, alternatively, a certain bit in the signaling field/service field may be reused, that is, a certain existing bit is used to indicate whether the PAPR reduction method provided in the embodiments of the present invention is used.

If an extra bit is added, to indicate whether the peak-to-average ratio reduction method according to the present invention is used and indicate a quantity of blocks obtained by means of division, the signaling field/service field in the frame structure needs to be modified. A specific method may be adding two bits to this field. When these bits are a first value, the PTS technology provided in the embodiments of the present invention is not used; or when these bits are a second value, the PAPR reduction method provided in the embodiments of the present invention is used, and a quantity of blocks is 2; and when these bits are a third value, the PAPR reduction method provided in the embodiments of the present invention is used, and a quantity of blocks is 4. For example, when these two bits are 00, the PTS technology provided in the embodiments of the present invention is not used; or when these two bits are 01, the PAPR reduction method provided in the embodiments of the present invention is used, and a quantity of blocks is 2; or when these two bits are 10, the PAPR reduction method provided in the embodiments of the present invention is used, and a quantity of blocks is 2. In addition, alternatively, two certain bits in the signaling field/service field may be reused, that is, two certain existing bits are used to indicate whether the PAPR reduction method provided in the embodiments of the present invention is used.

It should be understood that, in the foregoing description, a reserved subcarrier is used as example, to transmit an associated phase factor. That is, a phase factor to be used during peak-to-average ratio reduction is transmitted by using some subcarriers in an OFDM symbol for peak-to-average ratio reduction. However, a particular subcarrier may be further used for extension in addition to using the reserved subcarrier. For example, operations may also be performed on a pilot subcarrier in 802.11ad according to the method in the embodiments of the present invention. Further, the present invention may be extended to OFDM and OFDMA systems. For a single-user OFDM system, a phase factor may be transmitted by using a pilot subcarrier. For a multi-user OFDMA system, a phase factor may be transmitted by using a reserved subcarrier.

Specifically, a peak-to-average ratio reduction method provided in the present invention includes:

dividing subcarriers of an OFDM symbol that carries to-be-transmitted data, to obtain multiple blocks;
determining multiple phase factors corresponding to the multiple blocks, where the multiple phase factors are used to reduce a peak-to-average ratio of the OFDM symbol;
transmitting the multiple phase factors by using a particular subcarrier of the OFDM symbol; and
multiplying each block in the multiple blocks by a corresponding phase factor, and performing transmission.

Multiplying each block in the multiple blocks by a corresponding phase factor is to reduce a PAPR of the multiple blocks (or the OFDM symbol). Specifically, each subcarrier that is in each block and carries to-be-transmitted data is multiplied by a phase factor corresponding to the block, and is then transmitted.

Optionally, the particular subcarrier is a reserved subcarrier, and the reserved subcarrier is a reserved subcarrier in the subcarriers of the OFDM symbol. The reserved subcarrier carries phase factor information, and therefore does not need to be multiplied by a phase factor when being transmitted. Further, there are at least two manners of transmitting the phase factors by using the reserved subcarrier: In a first manner, the phase factors are directly transmitted, that is, the phase factors are directly carried on the reserved subcarrier for transmission; in a second manner, the phase factors are converted into the phase factor information and are then transmitted, where the phase factor information may be encoded, modulated, duplicated, or the like.

Optionally, the particular subcarrier is a pilot subcarrier. Further, the transmitting the multiple phase factors by using a particular subcarrier of the OFDM symbol includes: carrying the multiple phase factors on the pilot subcarrier for transmission, where the pilot subcarrier carries a product of a corresponding phase factor in the multiple phase factors and a pilot signal. It should be understood that, when the phase factors are transmitted by using the pilot subcarrier, the phase factors do not need to be converted or modulated; instead, the pilot signal is directly multiplied by a phase factor to be transmitted on the pilot subcarrier, and is then carried on the pilot subcarrier for transmission, where the pilot signal may be transmitted by using some or all pilot subcarriers.

It should be understood that, there may be one or more particular subcarriers; specifically, there may be one or more reserved subcarriers or pilot subcarriers. Whether some or all particular subcarriers are required for transmitting the phase factor (that is, particular subcarriers or a quantity of particular subcarriers) may be flexibly determined according to a transmission reliability requirement or an actual requirement. The following gives an example only, and this is not limited in the embodiments of the present invention. In addition, in the embodiments of the present invention, particular subcarriers with specific subcarrier sequence numbers are merely examples, and the particular subcarriers are not restricted to specific subcarriers. In actual application, the particular subcarrier may be determined according to an actual situation, or determined according to a location of a reserved subcarrier or a pilot subcarrier in a standard. Any implementation manner in which the method in the embodiments of the present invention is applied to a particular subcarrier falls within the protection scope of the present invention.

It should be understood that, in the embodiments of the present invention, QPSK, QAM, and the like are merely examples of modulation schemes. A specific modulation scheme may be phase shift keying modulation, differential modulation, energy modulation, or another common modulation scheme. This is not limited in the embodiments of the present invention. In the embodiments of the present invention, block coding, BCH coding, and the like are merely examples of coding schemes. A specific coding scheme may further be RS coding, cyclic coding, convolutional coding, Reed-Muller coding, or another common coding scheme. This is not limited in the embodiments of the present invention.

Specifically, the following gives further description about the two types of particular subcarriers.

FIG. 9 is a schematic diagram of a principle of transmitting phase factor information in a WiFi system. As shown in FIG. 9:

Step 901: Divide data transmitted on an orthogonal frequency division multiplexing OFDM symbol into Q blocks, where each block has one corresponding phase factor, and each phase factor is represented by using q bits.

Further, a phase factor is determined according to a result of block division, where the phase factor enables a PAPR of the OFDM symbol to be minimized.

Q and q are positive integers.

Specifically, some subcarriers are reserved on the OFDM symbol, which are reserved subcarriers. Subcarriers of the OFDM symbol are divided into blocks, and a phase factor of each block is determined. When a signal is sent, data carried on each block is multiplied by the corresponding phase factor, to reduce a peak-to-average ratio of the OFDM symbol. The reserved subcarriers are used to transmit the foregoing phase factors. The reserved subcarriers carry phase factor information, and therefore, do not need to be multiplied by a phase factor.

Specifically, each block has one corresponding phase factor, and each phase factor is represented by using q bits. That is, Q (multiple) phase factors are converted into phase factor information, so that they can be transmitted by using the reserved subcarriers. Further, conversion is performed according to a mapping rule between the phase factors and the phase factor information, where the mapping rule includes table mapping, formula mapping, or the like.

For example, an OFDM symbol with a bandwidth of 80 M and 1024 subcarriers is divided into four blocks in a frequency domain, where 256 subcarriers (corresponding to a bandwidth of 20 M) are one block. Each block has one corresponding phase factor, and there are a total of 4 phase factors. Each phase factor is represented by using two bits, and the two bits are phase factor information corresponding to each block. Then, a total of 8 bits need to be transmitted, where the 8 bits are phase factor information of the OFDM symbol.

In actual implementation, when a PTS is performed, input data is generally required to be divided into M blocks. Each block is multiplied by a corresponding phase factor, and is transmitted by an OFDM subcarrier. This is equivalent to that an OFDM symbol is divided into M blocks in a frequency domain, and each block is multiplied by a corresponding phase factor.

Optionally, the following step may be separately performed on each block of the Q blocks. In this case, a phase factor of each transport block is transmitted by using a reserved subcarrier in the transport block. Certainly, Q phase factors of Q transport blocks may be transmitted together by using some or all reserved subcarriers. The following uses the latter case as an example for description, and therefore, data such as Q and q are used. When the former case is used as an example, corresponding Q, q, and other data may be replaced by corresponding data in one transport block, and details are not described herein again.

Step 902: Encode Q*q bits that represent Q phase factors, to obtain k encoded bits.

The Q*q bits that represent Q phase factors is phase factor information.

Specifically, a coding scheme may be block coding, CRC coding, parity coding, or the like. For example, if (16, 8) block coding is performed on to-be-transmitted phase factor information of 8 bits, encoded data that needs to be transmitted is 16 bits.

Further, a matrix generated by means of block coding may be:

$$G_{8*16} = \begin{bmatrix} 1 & 0 & 0 & 0 & 0 & 0 & 0 & 0 & 0 & 1 & 1 & 0 & 1 & 0 & 1 & 0 \\ 0 & 1 & 0 & 0 & 0 & 0 & 0 & 0 & 0 & 0 & 1 & 1 & 0 & 1 & 0 & 1 \\ 0 & 0 & 1 & 0 & 0 & 0 & 0 & 0 & 1 & 0 & 0 & 1 & 1 & 0 & 1 & 0 \\ 0 & 0 & 0 & 1 & 0 & 0 & 0 & 0 & 0 & 1 & 0 & 0 & 1 & 1 & 0 & 1 \\ 0 & 0 & 0 & 0 & 1 & 0 & 0 & 0 & 1 & 0 & 1 & 0 & 0 & 1 & 1 & 0 \\ 0 & 0 & 0 & 0 & 0 & 1 & 0 & 0 & 1 & 0 & 1 & 0 & 0 & 1 & 1 \\ 0 & 0 & 0 & 0 & 0 & 0 & 1 & 0 & 1 & 0 & 1 & 0 & 1 & 0 & 0 & 1 \\ 0 & 0 & 0 & 0 & 0 & 0 & 0 & 1 & 1 & 1 & 0 & 1 & 0 & 1 & 0 & 0 \end{bmatrix},$$

or

$G_{8*12}$.

It should be noted that encoding the phase factor information may improve transmission reliability, but the following step may be performed without encoding the phase factor information. This may be flexibly determined according to an actual requirement.

Step 903: Modulate the encoded k bits, to obtain K symbols.

K and k are positive integers.

A modulation scheme may be direct modulation, for example, QPSK modulation may be directly performed; or may be energy modulation of transmission mode 2, for example, no signal is transmitted on a subcarrier corresponding to bit 0, and a pilot signal with a fixed value is transmitted on a subcarrier corresponding to bit 1; or may be differential modulation of transmission mode 3, for example, DQPSK modulation.

For example, DQPSK modulation is performed on the encoded data of 16 bits, to obtain 8 symbols; or QPSK modulation is performed on the encoded data of 16 bits, to obtain 8 symbols; or energy modulation (no signal is transmitted on a subcarrier corresponding to bit 0, and a pilot signal with a fixed value is transmitted on a subcarrier corresponding to bit 1) is performed on the encoded data of 16 bits, to obtain 16 symbols.

Step 904: Duplicate the modulated K symbols for p times, to obtain K*p symbols, and map the K*p symbols to a reserved subcarrier of the OFDM symbol for transmission.

p is a positive integer. As shown in FIG. 9,1 symbols are obtained after the K symbols are duplicated for p times, where l = K*p.

It should be noted that duplicating the modulated symbols may improve transmission reliability, but the modulated symbols may be mapped to a subcarrier without being duplicated. This may be flexibly determined according to an actual requirement.

Step 905: Map the K modulated symbols or the K*p duplicated symbols to the reserved subcarrier of the OFDM symbol for transmission.

For the K or K*p symbols to be mapped to the reserved subcarrier of OFDM, first, it should be ensured, as far as possible, that the reserved subcarrier is dispersed on a frequency band; and then the to-be-transmitted symbols are mapped, in a dispersed manner as far as possible, to some or all reserved subcarriers for transmission. For example, on an OFDM symbol with a bandwidth of 80 M and 1024 subcarriers, there are 24 reserved subcarriers, which are evenly dispersed on the entire frequency band, or it should be ensured, as far as possible, that there are specific carrier spacings between these reserved subcarriers. When a quantity of symbols that need to be transmitted is less than or equal to 24, mapping may be performed according to a rule that a variance of a sequence number difference between adjacent reserved subcarriers is minimized, and then transmission is performed.

Further, when differential modulation is used, a reserved subcarrier used for transmitting information is irrelevant to an allocated subband, and during receiving, signal restoration does not need to be dependent on channel information. For example, during receiving, restoration of a DQPSK-modulated symbol may not be dependent on the channel information. When energy modulation is used, restoration of a transmit signal is based on an energy signal and does not need to be dependent on channel information. When QPSK modulation is used, each reserved subcarrier used for transmitting phase factor information is bound with a subband, and during receiving, signal restoration may be dependent on channel information in the subband, that is, during receiving, the channel information is required for restoration. Therefore, when symbols obtained by means of differential modulation are duplicated, a quantity of duplicated symbols needs to be less than or equal to a quantity of reserved subcarriers. However, restoration of a symbol obtained by means of non-differential modulation is dependent on channel information; therefore, a reserved subcarrier for transmitting the symbol obtained by means of non-differential modulation needs to be adjacent to a subband that is used to transmit data.

When 26 subcarriers are used as a basic unit of a data block (or 26 subcarriers are grouped as one subband), and 1024-point FFT transform is performed when a bandwidth is 80 M, there are a total of 38 subbands, and 24 subcarriers are not used. Phase factor information of each transport block (one transport block herein is corresponding to a bandwidth of 20 M and 256 subcarriers, and for details, refer to the foregoing description) is reliably transmitted by using the 24 subcarriers, to reduce a peak-to-average ratio.

When 52 subcarriers are used as a basic unit of a data block (or 52 subcarriers are grouped as one subband), and 1024-point FFT transform is performed when a bandwidth is 80 M, there are a total of 19 subbands, and 24 subcarriers are not used. Phase factor information of each transport block (one transport block herein is corresponding to a bandwidth of 20 M and 256 subcarriers, and for details, refer to foregoing description) is reliably transmitted by using the 24 subcarriers, to reduce a peak-to-average ratio. An implementation solution is the same as a basic idea of the implementation solution for a case in which 26 subcarriers are grouped as one subband. However, in this solution, a quantity (which is 19) of subbands is less than a quantity (which is 24) of reserved subcarriers, and when non-differential modulation is used, a quantity of duplication times is restricted by the quantity (which is 19) of subbands; therefore, specific design may be different.

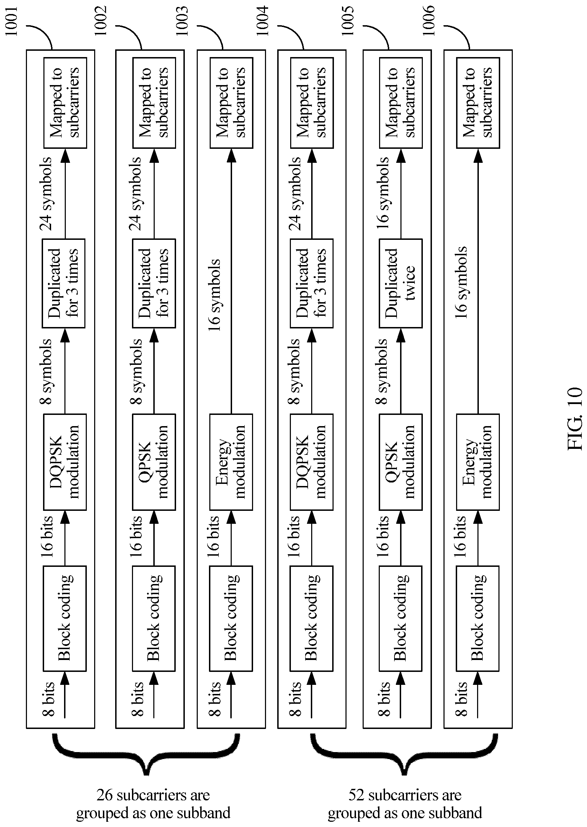

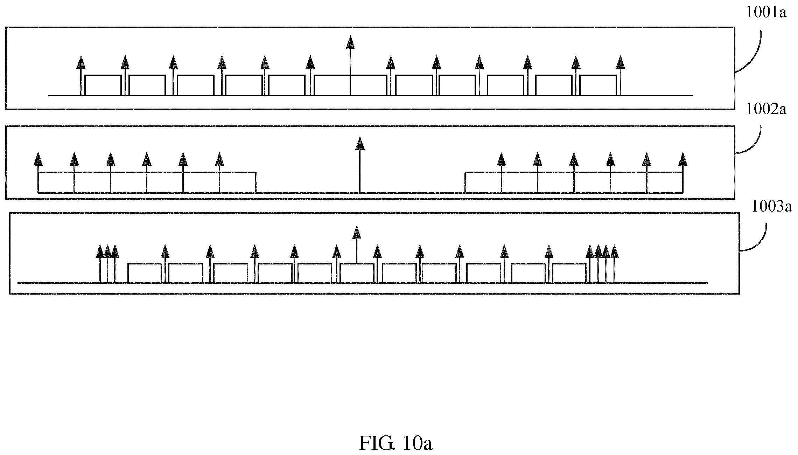

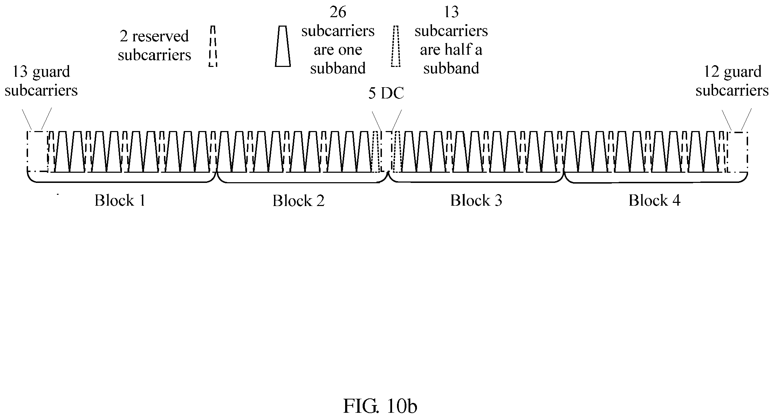

FIG. 10 is a schematic diagram of multiple specific implementation manners of transmitting phase factor information. As shown in FIG. 10, in an implementation manner 1001, an implementation manner 1002, and an implementation manner 1003, the first block division manner mentioned above is used, that is, 26 subcarriers are grouped as one subband. When a bandwidth is 80 M and there are 1024 subcarriers, 38 subbands are obtained by means of division, and there are 24 reserved subcarriers. A rule of distribution of the reserved subcarriers is determined as required during subcarrier mapping. In an implementation manner 1004, an implementation manner 1005, and an implementation manner 1006, the second block division manner mentioned above is used, that is, 52 subcarriers are grouped as one subband. When a bandwidth is 80 M and there are 1024 subcarriers, 19 subbands are obtained by means of division, and there are 24 reserved subcarriers. A rule of distribution of the reserved subcarriers is determined as required during subcarrier mapping.

FIG. 10a is a schematic diagram of distribution of reserved subcarriers in a frequency domain. As shown in FIG. 10a, a longer arrow represents a zero intermediate frequency, a rectangle represents a subband, a shorter arrow represents a reserved subcarrier, and there is a reserved subcarrier between two subbands. In FIG. 10a, three mapping manners are provided. During subcarrier mapping, a mapping manner may be selected according to a rule that a variance of a sequence number difference between adjacent reserved subcarriers is minimized. In addition, FIG. 10a provides only an illustration of distribution of reserved subcarriers, but does not limit a quantity of specific subcarriers or subbands. A subband and an adjacent reserved subcarrier constitute a duplication structure. A quantity of duplication structures is determined according to an actual situation, and should be properly adjusted according to an actual requirement during specific implementation. This is not limited in the embodiments of the present invention.

Specifically, in the six specific implementation manners in FIG. 10, a case in which a bandwidth is 80 M and there are 1024 subcarriers is used as an example. The subcarriers are divided into four transport blocks, and phase factor information of 8 bits needs to be transmitted.

In the implementation manner 1001, data of 16 bits is obtained after (16, 8) block coding is performed on the phase factor information of 8 bits, 8 symbols are obtained after DQPSK modulation is performed on the data of 16 bits, and 24 symbols are obtained by duplicating the 8 modulated symbols for three times. Then, the 24 symbols are mapped to 24 reserved subcarriers. A possible rule of distribution of the 24 reserved subcarriers is: (188 215 242 269 296 323 350 377 404 431 458 485 539 566 593 620 647 674 701 728 755 782 809 836); and in this manner, the reserved subcarriers are centralized at a location near a center of a frequency band, for example, a distribution manner 1001a in FIG. 10a. Another possible rule of distribution of the 24 reserved subcarriers is: (32 59 86 113 140 167 194 221 248 275 302 329 991 964 937 910 883 856 829 802 775 748 721 694); and in this manner, the reserved subcarriers are centralized at a location near an edge of a frequency band, for example, a distribution manner 1002a in FIG. 10a. Subcarrier sequence numbers range from 0 to 1023 in order.

In the implementation manner 1002, data of 16 bits is obtained after (16, 8) block coding is performed on the phase factor information of 8 bits, 8 symbols are obtained after QPSK modulation is performed on the data of 16 bits, and 24 symbols are obtained by duplicating the 8 modulated symbols for three times. Then, the 24 symbols are mapped to 24 reserved subcarriers. A possible rule of distribution of the 24 reserved subcarriers is: (188 215 242 269 296 323 350 377 404 431 458 485 539 566 593 620 647 674 701 728 755 782 809 836); and in this manner, the reserved subcarriers are centralized at a location near a center of a frequency band, for example, a distribution manner 1001a in FIG. 10a. Another possible rule of distribution of the 24 reserved subcarriers is: (32 59 86 113 140 167 194 221 248 275 302 329 991 964 937 910 883 856 829 802 775 748 721 694); and in this manner, the reserved subcarriers are centralized at a location near an edge of a frequency band, for example, a distribution manner 1002a in FIG. 10a. Subcarrier sequence numbers range from 0 to 1023 in order.

In the implementation manner 1003, data of 16 bits is obtained after (16, 8) block coding is performed on the phase factor information of 8 bits, and 16 symbols are obtained after energy modulation is performed on the data of 16 bits. Because there are only 24 reserved subcarriers, not all of the 16 symbols can be mapped to the reserved subcarriers after being duplicated, and therefore, no symbol is duplicated in the implementation manner 1003 of this embodiment of the present invention. Certainly, alternatively, some of the 16 modulated symbols may be duplicated, so as to fully use the 24 reserved subcarriers. This is not limited in the embodiments of the present invention. The 16 modulated symbols are mapped to 16 reserved subcarriers of the 24 reserved subcarriers. A possible rule of distribution of the 16 reserved subcarriers is: (296 323 350 377 404 431 458 485 539 566 593 620 647 674 701 728); and in this manner, the reserved subcarriers are centralized at a location near a center of a frequency band, for example, a distribution manner 1001a in FIG. 10a. Another possible rule of distribution of the 24 reserved subcarriers is: (32 59 86 113 140 167 194 221 883 856 829 802 775 748 721 694); and in this manner, the reserved subcarriers are centralized at a location near an edge of a frequency band, for example, a distribution manner 1002a in FIG. 10a. Subcarrier sequence numbers range from 0 to 1023 in order.

In the implementation manner 1004, data of 16 bits is obtained after (16, 8) block coding is performed on the phase factor information of 8 bits, 8 symbols are obtained after DQPSK modulation is performed on the data of 16 bits, and 24 symbols are obtained by duplicating the 8 modulated symbols for three times. Then, the 24 symbols are mapped to 24 reserved subcarriers. A possible rule of distribution of the 24 reserved subcarriers is: (5 6 7 60 113 166 219 272 325 378 431 484 538 591 644 697 750 803 856 909 962 1015 1016 1017). If 52 subcarriers are grouped as one subband, there are only 19 subbands and 24 reserved subcarriers. First, subcarriers 5, 6, 7, 1015, 1016, and 1017 are allocated as reserved subcarriers (subcarriers 0 to 5 and subcarriers 1018 to 1023 are guard subcarriers, and no data is transmitted on these subcarriers). For the remaining reserved subcarriers, one reserved subcarrier is inserted between two data block subbands, and exactly 18 reserved subcarriers are allocated (note that subcarrier 512 is a zero intermediate frequency, and no data is transmitted on the subcarrier), for example, a distribution manner 1003a in FIG. 10a.

In the implementation manner 1005, data of 16 bits is obtained after (16, 8) block coding is performed on the phase factor information of 8 bits, 8 symbols are obtained after QPSK modulation is performed on the data of 16 bits, and 16 symbols are obtained by duplicating the 8 modulated symbols twice. Then, the 16 symbols are mapped to 16 reserved subcarriers of 24 reserved subcarriers, which is different from the implementation manner 1002. Because there are only 19 subbands, and channel information needs to be used when the QPSK-modulated symbols are restored, a reserved subcarrier needs to be adjacent to a subband. Consequently, a quantity of symbols needs to be less than a quantity of subbands during mapping. Therefore, at maximum of 16 reserved subcarriers (or less than or equal to 19 reserved subcarriers) can be used for transmission. That is, only 16 subcarriers of the 24 subcarriers herein are used for transmitting control information, which is mainly because the channel information is required for demodulation when QPSK modulation is used, and the channel information can be obtained from subbands only. Because there are only 19 subbands, if one subband is associated with one reserved subcarrier, there are a maximum of 19 reserved subcarriers; or if one subband is associated with two or more reserved subcarriers, channel information obtained by means of interpolation during demodulation may be inaccurate (that is, the channel information about the reserved subcarriers is obtained by means of subband interpolation). Therefore, only 16 reserved subcarriers (corresponding to 16 subbands) are selected herein for transmitting control information. A possible rule of distribution of the 16 reserved subcarriers is: (88 141 194 247 300 353 406 459 565 618 671 724 777 830 883 936); and in this manner, the reserved subcarriers are centralized at a location near a center of a frequency band, for example, a distribution manner 1001a in FIG. 10a. Another possible rule of distribution of the 24 reserved subcarriers is: (57 110 163 216 269 322 375 428 646 699 752 805 858 911 964 1017); and in this manner, the reserved subcarriers are centralized at a location near an edge of a frequency band, for example, a distribution manner 1002a in FIG. 10a. Subcarrier sequence numbers range from 0 to 1023 in order.

In the implementation manner 1006, data of 16 bits is obtained after (16, 8) block coding is performed on the phase factor information of 8 bits, and 16 symbols are obtained after energy modulation is performed on the data of 16 bits. Because there are only 24 reserved subcarriers and 19 subbands, not all of the 16 symbols can be mapped to the reserved subcarriers after being duplicated, and therefore, no symbol is duplicated in the implementation manner 1003 of this embodiment of the present invention. Certainly, alternatively, some of the 16 modulated symbols may be duplicated, so as to fully use the 24 reserved subcarriers. This is not limited in the embodiments of the present invention. The 16 modulated symbols are mapped to 16 reserved subcarriers of the 24 reserved subcarriers. A possible rule of distribution of the 16 reserved subcarriers is: (88 141 194 247 300 353 406 459 565 618 671 724 777 830 883 936); and in this manner, the reserved subcarriers are centralized at a location near a center of a frequency band, for example, a distribution manner 1001a in FIG. 10a. Another possible rule of distribution of the 24 reserved subcarriers is: (57 110 163 216 269 322 375 428 646 699 752 805 858 911 964 1017); and in this manner, the reserved subcarriers are centralized at a location near an edge of a frequency band, for example, a distribution manner 1002a in FIG. 10a. Subcarrier sequence numbers range from 0 to 1023 in order.

Further, in 802.11ax, if a bandwidth is 80 M, and there are 1024 subcarriers, the following processing is specifically provided in this embodiment of the present invention.

FIG. 10b is a schematic diagram of a manner of dividing 1024 subcarriers in 802.11ax. As shown in FIG. 10b, all the 1024 subcarriers are divided into four blocks, which are a block 1, a block 2, a block 3, and a block 4, respectively. Each block has several subbands and reserved subcarriers. When 26 subcarriers are grouped as one subband, and a bandwidth of 80 M is divided into 1024 subcarriers, there are a total of 37 subbands, and 32 reserved subcarriers are not used. Details are as follows:

25 subcarriers are used as guard subcarriers, with 13 subcarriers on the left and 12 subcarriers on the right;
5 DC in the middle represents five intermediate frequencies (or referred to as zero intermediate frequencies), where no data is transmitted on the five intermediate frequencies, and subcarrier sequence numbers are 0, -1, 1, 2, and 3, respectively;
37 subbands or resource units are used to transmit data, where 13 subcarriers located on either side of a zero intermediate frequency together form a subband; and
two reserved subcarriers form a group, and there are a total of 32 subcarriers, where specific distribution locations (or subcarrier sequence numbers) are (-498, -497, -444, -443, -390, -389, -336, -335, -256, -255, -202, -201, -148, -147, -94, -93, 95, 96, 149, 150, 203, 204, 257, 258, 337, 338, 391, 392, 445, 446, 499, 500). Subcarrier sequence numbers range from -511 to 512.

It is required to implement that all or some of the 32 reserved subcarriers are used to reliably transmit phase factors (or phase factor information) of all the blocks, so that a PTS method may be used in a system to reduce a peak-to-average ratio. Based on the foregoing description, several design solutions for applying the method described above are described below.

The foregoing 1024 subcarriers may be divided into two blocks or four blocks. When the foregoing 1024 subcarriers are divided into two blocks, the subcarriers may be specifically divided as follows: a block 1 includes subcarriers -511 to 0, and a block 2 includes subcarriers 1 to 512. When the foregoing 1024 subcarriers are divided into four blocks, the subcarriers may be specifically divided as follows: a block 1 includes subcarriers -511 to -257, a block 2 includes subcarriers -256 to 0, a block 3 includes subcarriers 1 to 258, and a block includes subcarriers 259 to 512.

In the following description, that 1024 subcarriers are divided into four blocks is a basic solution. Processing for a case in which 1024 subcarriers are divided into two blocks is similar, and is not described again.

The foregoing division ensures that there are eight reserved subcarriers in each block.

Solution 1 - directly transmitting a phase factor:

Phase factors corresponding to the four blocks are $e^{j\phi_1}$, $e^{j\phi_2}$, $e^{j\phi_3}$, and $e^{j\phi_4}$, respectively. Using the first block as an example, there are two options: all the eight subcarriers (-498, -497, -444, -443, -390, -389, -336, -336) are selected to transmit $e^{j\phi_1}$; or four of the subcarriers, for example, (-498, -444, -390, -336, -335), are selected to transmit $e^{j\phi_1}$, and in this case, one subcarrier is selected from each pair of subcarriers. A processing manner for transmission of another quantity of blocks is similar, and may be learned by referring to the processing manner of the first block. Details are not described herein again.

Solution 2 - energy modulation manner:

Phase factors corresponding to the four blocks are $e^{j\phi_1}$, $e^{j\phi_2}$, $e^{j\phi_3}$, and $e^{j\phi_4}$, respectively. It is assumed that phases are selected from only four possible values, for example, (0, $\frac{\pi}{2}$, $\pi$, $\frac{3\pi}{2}$ ). A mapping relationship is shown in the following table, where m=1, 2, 3, 4.

**Table 1 Mapping relationship between phases and bits in the energy modulation manner**

| | $\phi_m = 0$ | $\phi_m = \frac{\pi}{2}$ | $\phi_m = \pi$ | $\phi_m = \frac{3\pi}{2}$ |
|---|---|---|---|---|
| $b_{2m}b_{2m}+1$ | 00 | 01 | 10 | 11 |

Using the first block as an example, when $\phi_1 = \frac{\pi}{2}$, no signal is transmitted (or a random signal is transmitted) on four subcarriers (-498, -444, -390, -336), and a signal with fixed energy is transmitted on (-497, -443, -389, -335). That is, an energy signal of 01 is transmitted on each pair of reserved subcarriers, for example, (-498, -497). A processing manner for transmission of another quantity of blocks is similar, and may be learned by referring to the processing manner of the first block. Details are not described herein again.

Solution 3 - differential modulation manner:

This solution includes two implementation manners, which are both described by using a processing manner of a certain block as an example. A processing manner for transmission of another quantity of blocks is similar, and may be learned by referring to the processing manner of the first block. Details are not described herein again.

In a first implementation manner, differential modulation is performed on a same subcarrier of two adjacent symbols. Details are as follows:

on the first OFDM symbol, known pilot information is transmitted on all reserved subcarriers, for example, all phase information is $\Phi_0$; and
a corresponding phase factor of the $n$th symbol of a certain block is $e^{j\phi_n}$, and corresponding phase information on a reserved subcarrier is $\Phi_n$; then $\Phi_n = e^{j\phi_n}\Phi_{n-1}$, where $n = 2, \cdots$.

The last symbol in an STF or an LTF may be selected as the first OFDM symbol used for differential modulation. Alternatively, PAPR reduction processing may be not performed on the first OFDM symbol, pilot signals transmitted on all reserved subcarriers are all 1 or a known signal, and the first OFDM symbol is used as the first OFDM symbol for differential modulation.

All the 32 reserved subcarriers may be selected, or some of the subcarriers may be selected. Still using the first block as an example, all the eight subcarriers (-498, -497, -444, -443, -390, -389, -336, -336) are selected to transmit $\Phi_n$; or four of the subcarriers, for example, (-498, -444, -390, -336, -335), are selected to transmit $\Phi_n$, and in this case, one subcarrier is selected from each pair of subcarriers.

$\phi_n$ may be an optimal phase obtained according to a corresponding algorithm, or may be a result obtained after QPSK modulation is performed according to two bits that are obtained according to Table 1 in solution 2.

In a second implementation manner, differential modulation is performed on two adjacent subcarriers of a same symbol. Details are as follows:

A corresponding phase of a block m is $\phi_m$, a corresponding phase factor on a corresponding $n$th symbol is $e^{j\phi_m}$, known pilot information $p$ is transmitted on subcarrier k, and known pilot information $pe^{j\phi_m}$ is transmitted on subcarrier . Using the first block as an example, is transmitted on four subcarriers (-498, -444, -390, -336), and $pe^{j\phi_m}$ is transmitted on (-497, -443, -389, -335).

$\phi_m$ may be an optimal phase obtained according to a corresponding algorithm, or may be a modulated symbol obtained after QPSK modulation is performed according to two bits that are obtained according to Table 1 in solution 2.

The last symbol in an STF or an LTF may be selected as the first OFDM symbol used for differential modulation. Alternatively, PAPR reduction processing may be not performed on the first OFDM symbol, pilot signals transmitted on all reserved subcarriers are all 1 or a known signal, and the first OFDM symbol is used as the first OFDM symbol for differential modulation.

Solution 4 - differential modulation+coding manner:

When a differential modulation+coding method is used to transmit a phase factor, an indication needs to be added to control signaling, so as to notify a receive end whether the peak-to-average ratio reduction processing method mentioned in the present invention is used in a transmitted symbol;

1024 subcarriers are divided into four blocks, and each block is multiplied by a corresponding phase factor; each phase factor is represented by using two bits, and a total of 8 bits need to be transmitted; for a mapping relationship between phases and bits, refer to Table 1;

phase factor information of 8 bits is encoded, where encoded data includes 16 bits, and specifically, (16, 8) block coding, 1/2 tail-biting convolutional code, or the like may be used;

DQPSK modulation is performed to generate eight symbols; and

if the symbols are duplicated for four times, that is, N = 4, 32 symbols are output, and all the 32 reserved subcarriers are occupied; or

if the symbols are duplicated for three times, that is, N = 3, 24 symbols are output; and three pairs of subcarriers are selected from four pairs of subcarriers of each block, for example, six subcarriers (-498, -497, -444, -443, -390, -389) are selected from subcarriers (-498, -497, -444, -443, -390, -389, -336, -336) of the first block.

Solution 5 - QPSK modulation+coding manner:

When a QAM modulation+coding method (QPSK is used in a specific implementation solution) is used to transmit phase shifting information, an indication needs to be added to control signaling, so as to notify a receive end whether the peak-to-average ratio reduction processing method mentioned in the present invention is used in a transmitted symbol;

1024 subcarriers are divided into four blocks, and each block is multiplied by a corresponding phase factor; each phase factor is represented by using two bits, and a total of 8 bits need to be transmitted; for a mapping relationship between phases and bits, refer to Table 1;

phase factor information of 8 bits is encoded, where encoded data includes 16 bits, and specifically, (16, 8) block coding, 1/2 tail-biting convolutional code, or the like may be used;

QPSK modulation is performed to generate eight symbols; and

if the symbols are duplicated for four times, that is, N = 4, 32 symbols are output, and all the 32 reserved subcarriers are occupied; or

if the symbols are duplicated for three times, that is, N = 3, 24 symbols are output; and three pairs of subcarriers are selected from four pairs of subcarriers of each block, for example, six subcarriers (-498, -497, -444, -443, -390, -389) are selected from subcarriers (-498, -497, -444, -443, -390, -389, -336, -336) of the first block.

Solution 6 - energy modulation+coding manner:

When an energy modulation+coding method (QPSK is used in a specific implementation solution) is used to transmit phase shifting information, an indication needs to be added to control signaling, so as to notify a receive end whether the peak-to-average ratio reduction processing method mentioned in the present invention is used in a transmitted symbol;

1024 subcarriers are divided into four blocks, and each block is multiplied by a corresponding phase factor; each phase factor is represented by using two bits, and a total of 8 bits need to be transmitted; for a mapping relationship between phases and bits, refer to Table 1;

phase factor information of 8 bits is encoded, where encoded data includes 16 bits, and specifically, (16, 8) block coding, 1/2 tail-biting convolutional code, or the like may be used;

energy modulation is performed to generate 32 symbols; and

the modulated symbols are transmitted by using all the 32 reserved subcarriers.

It should be understood that, in 802.11ax, there is a pilot subcarrier on each subband or in each resource unit, and no to-be-transmitted data is carried on the pilot subcarrier during specific transmission. Therefore, when the method provided in the embodiments of the present invention is implemented, when data carried on a block is multiplied by a phase factor corresponding to the block, a pilot subcarrier on the block (or a pilot signal carried on the block) does not need to be multiplied by the phase factor.

For example, it is assumed that input data in an OFDM symbol is x(n), data obtained after PTS transformation is y(n), where n = 0, 1, 2, ..., N-1, n is a sequence number of subcarrier, and N is a quantity of subcarriers.

When n is not a sequence number of a pilot subcarrier, the following operation is performed:

$$m\frac{N}{4} \le n \le (m+1)\frac{N}{4} - 1$$

$y(n) = x(n)e^{j\phi_m}$, and a subcarrier corresponding to n is not a reserved subcarrier or a pilot subcarrier,

where $e^{j\phi_m}$ is a phase factor, $m = 1,2,3,4$, a value of $\phi_m$ is obtained from a set $\Phi = \{0, \frac{\pi}{2}, \pi, \frac{3\pi}{2}\}$, that is, a value of $e^{j\phi_m}$ is obtained from a set $\{e^{j*0}, e^{j*\frac{\pi}{2}}, e^{j*\pi}, e^{j*\frac{3\pi}{2}}\}$, so that a PAPR of an OFDM symbol that carries output data is minimized.

Phase factor information is encoded and modulated:

8 bits, that is, $b_0b_1b_2b_3b_4b_5b_6b_7$, are generated to represent the phase factor information $\phi_m$, where $m = 0,1,2,3$. A specific corresponding rule is shown in the following table.

|  | $\phi_m = 0$ | $\phi_m = \frac{\pi}{2}$ | $\phi_m = \pi$ | $\phi_m = \frac{3\pi}{2}$ |
|---|---|---|---|---|
| $b_{2m}b_{2m+1}$ | 00 | 01 | 10 | 11 |

It should be understood that this corresponding rule is only one manner, and a simple variation, for example, $\Phi = \{0, \frac{\pi}{2}, \pi, \frac{3\pi}{2}\}$ is corresponding to {11, 10, 01, 00}, also falls within the protection scope of the present invention.

Block coding is performed on $b_0b_1b_2b_3b_4b_5b_6b_7$ to obtain output bits $[b'_0 \ b'_1 \ b'_2 \cdots b'_{15}] = mod([b_0 \ b_1 \ b_2 \cdots b_7] * \mathbf{G}_{8*16}, 2)$, where $\mathbf{G}_{8*16}$ is a block encoder that outputs 16 bits for an input of 8 bits, and mod indicates calculating a remainder based on a modulus operator of 2. For example, $\mathbf{G}_{8*16}$ may be the following matrix:

$$G_{8*16} = \begin{bmatrix} 1 & 0 & 0 & 0 & 0 & 0 & 0 & 0 & 0 & 1 & 1 & 0 & 1 & 0 & 1 & 0 \\ 0 & 1 & 0 & 0 & 0 & 0 & 0 & 0 & 0 & 0 & 1 & 1 & 0 & 1 & 0 & 1 \\ 0 & 0 & 1 & 0 & 0 & 0 & 0 & 0 & 1 & 0 & 0 & 1 & 1 & 0 & 1 & 0 \\ 0 & 0 & 0 & 1 & 0 & 0 & 0 & 0 & 0 & 1 & 0 & 0 & 1 & 1 & 0 & 1 \\ 0 & 0 & 0 & 0 & 1 & 0 & 0 & 0 & 1 & 0 & 1 & 0 & 0 & 1 & 1 & 0 \\ 0 & 0 & 0 & 0 & 0 & 1 & 0 & 0 & 0 & 1 & 0 & 1 & 0 & 0 & 1 & 1 \\ 0 & 0 & 0 & 0 & 0 & 0 & 1 & 0 & 1 & 0 & 1 & 0 & 1 & 0 & 0 & 1 \\ 0 & 0 & 0 & 0 & 0 & 0 & 0 & 1 & 1 & 1 & 0 & 1 & 0 & 1 & 0 & 0 \end{bmatrix}.$$

In addition to the foregoing block coding, alternatively, BCH (Bose-Chauduri-Hocquenghem) codes (15, 11) may be used. Herein, it is required that a bit length of input information is 11, and a code length after coding is 15 bits. To meet a requirement of the embodiment of the present invention, certain processing needs to be performed on the coding process. Processing in this case is as follows: three 0s are padded behind $b_0 b_1 b_2 b_3 b_4 b_5 b_6 b_7$ to extend $b_0 b_1 b_2 b_3 b_4 b_5 b_6 b_7$ to 11 bits, so as to obtain $b_0 b_1 b_2 b_3 b_4 b_5 b_6 b_7 000$; and (15, 11) BCH coding is performed on the 11 bits, where output bits obtained by means of coding are $[b'_0 \ b'_1 \ b'_2 \cdots b'_{14} b'_{15}]$, and $b'_{15}$ is a padded value 0 (that is, a supplementary redundant bit 0).

QPSK modulation is performed on $b'0 \ b'_1 \ b'_2 \cdots b'_{15}$, and modulated data is $y_{s,0}, y_{s,1}, y_{s,2}, y_{s,3}, y_{s,4}, y_{s,5}, y_{s,6}, y_{s,7}$, where s is a sequence number of an OFDM symbol.

$\hat{y}_{s,0}, \hat{y}_{s,1}, \hat{y}_{s,2}, \cdots, \hat{y}_{s,23}$ may be obtained by duplicating $y_{s,0}, y_{s,1}, y_{s,2}, y_{s,3}, y_{s,4}, y_{s,5}, y_{s,6}, y_{s,7}$ for three times.

$\hat{y}_{s,0}, \hat{y}_{s,1}, \hat{y}_{s,2}, \cdots, \hat{y}_{s,23}$ is multiplied by phase factor information of the $(s-1)^{th}$ OFDM symbol, that is, by $y'_{s,t}$, that is, $y'_{s,t} = \hat{y}_{s,t} * y'_{s-1,t}$, where $t = 0, 1, 2, 3, ..., 23$.

The 24 symbols $y'_{s,t}, t = 0, 1, \cdots, 23$ are mapped to reserved subcarriers.

In addition to the foregoing coding manner in the foregoing example, alternatively, Reed-Muller coding may be used to implement an embodiment of the present invention. Specific implementation is as follows: Reed-Muller coding is performed on $b_0 b_1 b_2 b_3 b_4 b_5 b_6 b_7$ to obtain output bits $[b'_0 \ b'_1 \ b'_2 \cdots b'_{31}] = mod([b_0 \ b_1 \ b_2 \cdots b_7] * G_{8*16}, 2)$, where $G_{8*32}$ is an encoder that outputs 32 bits for an input of 8 bits, and mod indicates calculating a remainder based on a modulus operator of 2. For example, $G_{8*16}$ may be the following matrix:

$$G_{8*32} = \begin{bmatrix} 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 & 1 \\ 1 & 1 & 0 & 0 & 1 & 1 & 0 & 0 & 1 & 0 & 0 & 1 & 0 & 1 & 0 & 1 & 1 & 0 & 1 & 0 & 0 & 1 & 0 & 1 & 1 & 1 & 0 & 1 & 0 & 0 & 1 & 0 \\ 0 & 1 & 0 & 1 & 1 & 0 & 1 & 0 & 0 & 1 & 1 & 1 & 0 & 0 & 0 & 0 & 1 & 0 & 0 & 0 & 1 & 0 & 0 & 1 & 1 & 0 & 1 & 1 & 1 & 1 & 1 & 0 \\ 0 & 0 & 1 & 1 & 1 & 0 & 0 & 1 & 1 & 1 & 0 & 0 & 1 & 1 & 0 & 0 & 0 & 1 & 1 & 0 & 0 & 1 & 0 & 0 & 1 & 0 & 1 & 1 & 0 & 1 & 1 & 0 \\ 0 & 0 & 0 & 0 & 0 & 1 & 1 & 1 & 1 & 0 & 0 & 0 & 0 & 1 & 1 & 1 & 1 & 0 & 0 & 0 & 1 & 1 & 1 & 0 & 0 & 0 & 1 & 1 & 1 & 0 & 0 & 0 \\ 0 & 0 & 0 & 0 & 0 & 0 & 0 & 0 & 0 & 1 & 1 & 1 & 1 & 1 & 1 & 1 & 1 & 1 & 1 & 0 & 0 & 0 & 0 & 0 & 1 & 1 & 1 & 1 & 1 & 1 & 1 & 0 \\ 0 & 0 & 1 & 0 & 0 & 1 & 1 & 0 & 0 & 1 & 1 & 1 & 0 & 0 & 0 & 1 & 1 & 0 & 1 & 1 & 1 & 0 & 0 & 0 & 1 & 1 & 0 & 0 & 1 & 1 & 1 & 0 \\ 0 & 0 & 0 & 0 & 1 & 1 & 0 & 1 & 1 & 0 & 1 & 0 & 1 & 1 & 1 & 1 & 0 & 0 & 1 & 0 & 0 & 0 & 1 & 0 & 1 & 1 & 0 & 1 & 0 & 1 & 1 & 0 \end{bmatrix}.$$

QPSK modulation is performed on $b'_0 \ b'_1 \ b'_2 \cdots b'_{31}$, and modulated data is $y_{s,0}, y_{s,1}, y_{s,2}, y_{s,3}, y_{s,4}, y_{s,5}, y_{s,6}, \cdots y_{s,15}$, where s is a sequence number of an OFDM symbol.

$\hat{y}_{s,0}, \hat{y}_{s,1}, \hat{y}_{s,2}, \cdots, \hat{y}_{s,31}$ may be obtained by duplicating $y_{s,0}, y_{s,1}, y_{s,2}, y_{s,3}, y_{s,4}, y_{s,5}, y_{s,6}, \cdots y_{s,15}$ twice.

$\hat{y}_{s,0}, y_{s,1}, y_{s,2}, \cdots, y_{s,23}$, is multiplied by phase factor information of the $(s-1)^{th}$ OFDM symbol, that is, by $y_{s,t}$, that is, $y_{s,t} - \hat{y}_{s,t}^* \ y'_{s-1,t}$, where $t = 0, 1, 2, 3, ..., 31$.

The 32 symbols, that is, $y'_{s,t}$, where $t = 0, 1, \cdots, 31$ are mapped to reserved subcarriers.

It should be understood that, in the foregoing examples, DQPSK is implemented by two steps; that is, first QPSK is performed, and subcarriers are multiplied by phase factors. In addition, a step of duplication for three times is inserted between the two steps. However, a specific principle and a specific manner are consistent with those of the embodiments of the present invention.

It can be learned from the foregoing examples that, in the embodiments of the present invention, a reserved subcarrier in an OFDM symbol is used to transmit phase factors for reducing a PAPR (of the OFDM symbol). The phase factors may be obtained according to the PTS method provided in the embodiments of the present invention, and then the phase factors are transmitted by using the reserved subcarrier. Specifically, the phase factors are converted into phase factor information according to a corresponding rule, and the phase factor information is mapped to the reserved subcarrier for transmission after being encoded, modulated, or duplicated.

802.11ad is a subsystem of an IEEE 802.11 (or referred to as WLAN, wireless local area network) system, and operates on a high frequency band of 60 GHz. The subsystem is mainly used to transmit wireless high-definition audio and video signals inside a home, to provide a more complete high-definition video solution for a home multimedia application, and is also referred to as WiGig (60 GHz Wi-Fi). Compared with a current WiFi technology, the 802.11ad technology has features such as a high capacity, a high rate (a maximum transmission rate of a PHY may reach 7 Gbps when an OFDM multi-carrier solution is used, and a maximum transmission rate may reach 4.6 Gbps when a single-carrier modulation solution is used), a low delay, and low power consumption in a multimedia application.

FIG. 11a is an emulation diagram of distribution of PAPR CCDFs in an 802.11ad system. As shown in FIG. 11a, 802.11 ad operates on a high frequency band of 60 GHz, and therefore, is more sensitive to a PAPR problem. An amplifier with a wide dynamic range in a high frequency band is very expensive, and consequently, costs of amplifiers required for proper running of an OFDM system that is divided based on 512 subcarriers restrict application of the 802.11ad system.

An expensive amplifier needs to be used in the 802.11ad system due to a PAPR problem of an OFDM system, and therefore, application of the 11ad system is restricted. Correspondingly, a PTS algorithm may also be used in 802.11ad to reduce a PAPR. The present invention provides a method for using the PTS algorithm by reusing a pilot subcarrier, so as to effectively resolve the PAPR problem.

Further, an OFDM symbol consists of 512 subcarriers (for example, an OFDM symbol in the 802.11ad system), and a peak-to-average ratio may also be reduced by using the method provided in the embodiments of the present invention. However, it should be noted that, in comparison with the foregoing embodiments in which a reserved subcarrier of a current OFDM symbol is transmitted in an associated manner by using a reserved subcarrier, in this embodiment, a phase factor of a current OFDM symbol is transmitted by using a pilot subcarrier, that is, the pilot subcarrier is not only used to transmit a pilot signal, but also is used to transmit a phase factor. A specific process is as follows:

512 subcarriers of an OFDM symbol are numbered from -255 to 256, that is -255, -254, -253, ..., -1, 0, 1, 2, ..., 255, 256. In this case, a subcarrier whose sequence number is 0 is exactly a zero intermediate frequency. In addition, the 512 subcarriers of the OFDM symbol are divided as follows:

subcarriers whose sequence numbers are (-150, -130, -110, -90, -70, -50, -30, -10, 10, 30, 50, 70, 90, 110, 130, 150) are used to transmit pilot signals;
no signal is transmitted on subcarriers whose sequence numbers are (0, +1, -1);
no signal is transmitted on subcarriers whose sequence numbers are greater than 177 or less than -177; and
the remaining 336 subcarriers are used to transmit data symbols.

The 512 subcarriers of the foregoing OFDM symbol may be divided into several blocks, for example, two or four blocks. Data and a pilot carried on subcarriers of each block are all multiplied by a phase factor corresponding to the block. A phase factor may be selected for each block, so that a PAPR of the OFDM symbol is minimized, where the phase factor may be determined by using the two typical algorithms provided in the foregoing description. Optionally, a specific block dividing manner is as follows:

Using a case in which the subcarriers are divided into two blocks as an example, subcarrier sequence numbers corresponding to the first block are -255 to 0, and subcarrier sequence numbers corresponding to the second block are 1 to 256; or

using a case in which the subcarriers are divided into four blocks as an example, subcarrier sequence numbers corresponding to the first block are -255 to -90, subcarrier sequence numbers corresponding to the second block is -89 to 0, subcarrier sequence numbers corresponding to the third block is 1 to 89, and subcarrier sequence numbers corresponding to the fourth block is 90 to 256.

(1) When the subcarriers are divided into two blocks, a signal is transmitted in the following manner:

$$r_{DATA}(qT_s) = \frac{1}{\sqrt{N_{Tones}}} \sum_{n=1}^{N_{SYM}} w_{T_{SYM}}(qT_s - (n-1)T_{SYM}) \left( \sum_{k=-N_{SR}}^{0} \exp(j\phi_1)(D_{k,n} + p_{n+1}P_k) + \sum_{k=1}^{N_{SR}} \exp(j\phi_2)(D_{k,n} + p_{n+1}P_k) \right) \exp(j2\pi k\Delta_F(qT_s - (n-1)T_{SYM-T_{GI}}))$$

where $T_s$ is a sampling time, $q$ is a sampling sequence number, $N_{Tones}$ = 512 is a total quantity of subcarriers, $N_{SYM}$ is a quantity of to-be-transmitted OFDM symbols, $T_{SYM}$ is a timeslot length corresponding to the OFDM symbol, $T_{GI}$ is a timeslot interval corresponding to a guard interval, $D_{k,n}$ is transmitted data, $p_{n+1}P_k$ is a pilot signal, $\exp(j\phi_1)$, $\exp(j\phi_2)$ are phase factors introduced to reduce a PAPR, $\omega_{T_{SYM}}$ is a window function, and $N_{SR}$ = 177.

(2) When the subcarriers are divided into four blocks, a signal is transmitted in the following manner:

$$r_{DATA}(qT_s) = \frac{1}{\sqrt{N_{Tones}}} \sum_{n=1}^{N_{SYM}} w_{T_{SYM}}(qT_s - (n-1)T_{SYM}) \left( \sum_{k=-N_{SR}}^{-90} \exp(j\phi_1)(D_{k,n} + p_{n+1}P_k) + \sum_{k=-89}^{0} \exp(j\phi_2)(D_{k,n} + p_{n+1}P_k) + \right.$$
$$\left. \sum_{k=1}^{89} \exp(j\phi_3)(D_{k,n} + p_{n+1}P_k) + \sum_{k=-90}^{N_{SR}} \exp j\phi_4 (D_{k,n} + p_{n+1}P_k) \right) \exp(j2\pi k\Delta_F(qT_s - (n-1)T_{SYM-T_{GI}}))$$

where $T_s$ is a sampling time, $q$ is a sampling sequence number, $N_{Tones}$ = 512 is a total quantity of subcarriers, $N_{SYM}$ is a quantity of to-be-transmitted OFDM symbols, $T_{SYM}$ is a timeslot length corresponding to the OFDM symbol, $T_{GI}$ is a timeslot interval corresponding to a guard interval, $D_{k,n}$ is transmitted data, $p_{n+1}P_k$ is a pilot signal, $\exp(j\phi_1)$, $\exp(j\phi_2)$, $\exp(j\phi_3)$, $\exp(j\phi_4)$ are phase factors introduced to reduce a PAPR, $\omega_{T_{SYM}}$ is a window function, and $N_{SR}$ = 177.

Optionally, if the PAPR reduction method provided in the embodiments of the present invention is not used, the phase factors in the foregoing transmit signal may be set to 1, so that they are compatible with an existing standard.

In this embodiment, the phase factors are directly transmitted on a pilot. Therefore, phase factor selection is not restricted, and the phase factors may be selected from a fixed set, or may be any values obtained by using another method.

Correspondingly, some adjustments need to be made at a receive end. In an OFDM symbol in 802.11ad, a pilot subcarrier is used to obtain a phase deviation, and the phase deviation may be embodied by a phase deviation factor. Before the present method is used, a general algorithm for obtaining a phase deviation factor is as follows:

A signal received on subcarrier k is:

$$r_k = h_p e^{j\theta} p_k + z_k$$

where k is a sequence number of a pilot subcarrier and may be selected from {-150, -130, -110, -90, -70, -50, -30, -10, 10, 30, 50, 70, 90, 110, 130, 150}, $z_k$ is noise, $h_k$ is a known channel, $e^{j\theta}$ is a phase deviation factor, and $r_k$ is a received signal.

$$e^{j\hat{\theta}} = \frac{1}{16} \sum_{k \in \Gamma} r_k / (p_k h_p)$$

The phase deviation factor is obtained by using the following method: , where $\Gamma$ is a set of sequence numbers of pilot subcarriers {-150, -130, -110, -90, -70, -50, -30, -10, 10, 30, 50, 70, 90, 110, 130, 150}.

After $e^{j\hat{\theta}}$ is obtained, the value is used to compensate for all channel information:

$\hat{h}_k = h_k e^{-j\hat{\theta}}$, where k = -177, ..., 177.

Channel balancing is performed on a received signal by using compensated channel information.

After the present algorithm is introduced, because different phase factors are introduced to different blocks, a receiving algorithm needs to be modified accordingly.

Using a case in which the subcarriers are divided into two blocks as an example:

For the first block, a product of a phase deviation factor and a phase factor of the first block is obtained by using pilot subcarriers {-150, -130, -110, -90, -70, -50, -30, -10}, where a received signal is:

$r_k = h_p e^{j\theta} e^{j\phi_1} p_k + z_k$, where $k \in \Gamma_1$, and $\Gamma_1$ = {-150, -130, -110, -90, -70, -50, -30, -10}. For ease of description, let $\theta + \phi_1 = \varphi_1$.

$$e^{j\hat{\varphi}_1} = \frac{1}{8} \sum_{k \in \Gamma} r_k / (p_k h_p)$$

Likewise, $e^{j\varphi_1}$ is estimated as follows:

After $e^{j\varphi_1}$ is obtained, the value is used to compensate for all channel information on the first block:

$\hat{h}_k = h_k e^{-j\hat{\varphi}_1}$, where k = -177, -176, ..., 0. Channel balancing is performed, by using compensated channel information, on a signal received on the first block.

For the second block, a product of a phase deviation factor and a phase factor of the second block is obtained by using pilot subcarriers {-150, -130, -110, -90, -70, -50, -30, -10}, where a received signal is:

$r_k = h_p e^{j\theta} e^{j\phi_2} p_k + z_k$, where $k \in \Gamma_2$, and $\Gamma_2$ = {10, 30, 50, 70, 90, 110, 130, 150)}. For ease of description, let $\theta + \phi_2 = \varphi_2$.

$$e^{j\hat{\varphi}_2} = \frac{1}{8} \sum_{k \in \Gamma} r_k / (p_k h_p)$$

Likewise, $e^{j\varphi_2}$ is estimated as follows:

After $e^{j\hat{\varphi}_2}$ is obtained, the value is used to compensate for all channel information on the second block:

$\hat{h}_k = h_k e^{-j\hat{\varphi}_2}$, where k = 1, 2, ..., 177. Channel balancing is performed, by using compensated channel information, on a signal received on the second block.

At the receive end, an estimate of a phase deviation obtained based on a pilot subcarrier also needs to be adjusted according to a block division situation. If the subcarriers are divided into four blocks, estimates of a phase deviation and phase compensation (which is corresponding to the phase deviation and is a conjugate or an opposite number of the phase deviation) is adjusted as follows:

For the first block, an estimate of a phase deviation may be obtained according to a channel response of pilot subcarriers (-150, -130, -110, -90);

for the second block, an estimate of a phase deviation may be obtained according to a channel response of pilot subcarriers (-70, -50, -30, -10);

for the third block, an estimate of a phase deviation may be obtained according to a channel response of pilot subcarriers (10, 30, 50, 70); and

for the fourth block, an estimate of a phase deviation may be obtained according to a channel response of pilot subcarriers (90, 110, 130, 150).

It may be learned from the foregoing that slight adjustment needs to be performed when the method provided in the embodiments of the present invention is applied, thereby facilitating reduction of a PAPR. Other steps for the case in which the subcarriers are divided into four blocks are similar to those for the case in which the subcarriers are divided into two blocks, and may be learned by referring to the foregoing example. Details are not described herein again.

According to the 802.11 standard, two bits are reserved in an OFDM frame header field, and are used to indicate whether the method provided in the embodiments of the present invention is applied, or used to indicate a specific method that is used. Details are as follows:

when the two bits are 00 (or a value is 0), it represents that an OFDM symbol received at a receive end in 802.11ad is the same as an existing OFDM symbol, or represents that the PAPR reduction method provided in the embodiments of the present invention is not used;

when the two bits are 01 (or a value is 1), it represents that the PAPR reduction method, in the embodiments of the present invention, in which subcarriers are divided into two blocks is used;

when the two bits are 10 (or a value is 2), it represents that the PAPR reduction method, in the embodiments of the present invention, in which subcarriers are divided into four blocks is used; or

when the two bits are 11 (or a value is 3), it represents that the bits may be ignored by the receive end, or represents that the two bits are meaningless.

FIG. 11 is an emulation diagram of reduced PAPRs according to an embodiment of the present invention. As shown in FIG. 11, the method provided in the embodiments of the present invention is applied in directional multi-Gigabit (English: Directional Multi-Gigabit, DMG for short) OFDM. Related parameters and results are shown in Table 2.

**Table 2 Parameters and results of emulation in FIG. 11**

| Quantity of blocks | Phase factor selection set | Gain when Pr = 0.1 |
|---|---|---|
| 2 | 1, -1 | 0.8 dB |
| 2 | 1, j, -1, -j | 1.2 dB |
| 4 | 1, -1 | 1.5 dB |
| 4 | 1, j, -1, -j | 2.2 dB |

A phase factor selection set in Table 2 represents a set from which a phase factor is selected to determine the phase factor, for example, {1, j, -1, -j}, which is corresponding to the typical algorithm 2 provided in the foregoing description.

By using the method provided in the embodiments of the present invention, a relatively high PAPR gain may be obtained with relatively slight adjustment or modification.

A PAPR of a transmit signal is reduced by using a PTS method in the transmit signal. In addition, a particular subcarrier is used to transmit associated control information (for example, a phase factor), so that a receiver may restore an original signal.

Phase factor information of each block is transmitted by using the particular subcarrier, so that application of a PTS method in a WiFi system becomes possible, thereby effectively reducing a PAPR of data.

Corresponding to the foregoing embodiments, the present invention further provides a peak-to-average ratio method used when there are multiple antennas. Stilling using 802.11ax as an example, 1 to 8 antennas need to be supported when a bandwidth is 80 M.

When 26 subcarriers are grouped as one subband, and the bandwidth of 80 M is divided into 1024 subcarriers, there are a total of 37 subbands, and 32 reserved subcarriers are not used. Specific subcarrier division is shown in FIG. 10b:

> 25 subcarriers are used as guard subcarriers, with 13 subcarriers on the left and 12 subcarriers on the right;
> no data is transmitted on 5 zero intermediate frequencies, which are 0, -1, 1, 2, 3, respectively;
> 37 subbands or resource units are used to transmit data, where 13 subcarriers located on either side of a zero intermediate frequency together form a subband; and
> two reserved subcarriers form a group, and there are a total of 32 subcarriers, where specific mapped locations are (-498, -497, -444, -443, -390, -389, -336, -335, -256, -255, -202, -201, -148, -147, -94, -93, 95, 96, 149, 150, 203, 204, 257, 258, 337, 338, 391, 392, 445, 446, 499, 500), and subcarrier sequence numbers range from -511 to 512.

Specifically, when there are multiple antennas, there are three different implementation manners, which are also based on the foregoing subcarrier allocation solution and are described below. For ease of description, description is given by using two antennas as an example. One antenna is corresponding to one stream. Therefore, the following three implementation solutions are described based on two streams. An implementation manner for another case in which there are multiple streams may be learned by referring to the case in which there are two streams. Details are not described herein again. One stream is used to transmit one OFDM symbol.

In a first implementation solution, it is assumed that channel information corresponding to a reserved subcarrier is known, and in this case, a processing manner is as follows:

Peak-to-average ratio reduction processing is separately performed on each stream to obtain a phase factor transmitted on each reserved subcarrier, and the phase factors are transmitted, where all the streams use the same reserved subcarriers to transmit the phase factors;

a phase factor, of each stream, on each block is obtained at a receive end in a MIMO demodulation manner; and subsequent operations are the same as those in a case in which there is a single stream (for example, the case in which there is one OFDM symbol in the foregoing description).

For example, a transmit end has two antennas for transmitting signals, and a receive end has two antennas for receiving the signals. There are two streams that separately transmit OFDM symbols, and subcarriers of an OFDM symbol on either stream are divided into four blocks. Using the first block as an example, a phase factor corresponding to the first stream is $e^{j\phi_{11}}$, and a phase factor corresponding to the second stream is $e^{j\phi_{21}}$, where $\phi_{11}$ represents a phase, of the first stream, on the first block, and $\phi_{21}$ represents a phase, of the second stream, on the first block. Similarly, the two phase factors are transmitted on each of four subcarriers (-498, -444, -390, -336) on the first block. For data carried on subcarrier -498, a received signal may be represented as:

$$\begin{bmatrix} r_{-498,1} \\ r_{-498,2} \end{bmatrix} = \begin{bmatrix} h_{-498,11} & h_{-498,12} \\ h_{-498,21} & h_{-498,22} \end{bmatrix} \begin{bmatrix} e^{j\phi_{11}} \\ e^{j\phi_{21}} \end{bmatrix} + \mathbf{z}$$

where $r_{k_1,k_2}$ represents data received by antenna $k_1 = 1, 2$, and $k_2$ represents a subcarrier sequence number; $h_{k_2,k_1 k_3}$ represents a channel, on subcarrier $k_2$, from stream $k_3 = 1, 2$ to the antenna $k_1 = 1, 2$, and z is noise.

According to the foregoing formula, estimates of the phase factors transmitted on subcarrier -498 may be resolved by using an existing MIMO processing method. Estimates of the two phase factors transmitted on each of the subcarriers (-444, -390, -336) may be resolved by analogy. After the estimates of the two phase factors transmitted on each of the four subcarriers are combined, phase factor information may be correctly restored. The remaining three blocks are processed in a similar manner.

In the foregoing description, a reserved subcarrier is used to transmit information about a phase factor. Alternatively, a reserved subcarrier may be used to transmit information that is about a phase factor and that is obtained after modulation (for example, QPSK) is performed on the phase factor, information that is about a phase factor and that is obtained after differential modulation is performed on the phase factor, information that is about a phase factor and that is obtained after energy modulation is performed on the phase factor, information that is about a phase factor and that is obtained after encoding and modulation are performed on the phase factor, information that is about a phase factor and that is obtained after encoding and differential modulation are performed on the phase factor, information that is about a phase factor and that is obtained after encoding and energy modulation are performed on the phase factor, or the like.

In a second implementation solution, it is assumed that channel information corresponding to a reserved subcarrier is unknown, and in this case, a processing manner is as follows:

Peak-to-average ratio reduction processing is separately performed on each stream, to obtain a phase factor transmitted on each reserved subcarrier;

one group of reserved subcarriers is allocated to each stream for transmitting a phase factor, where there are a total of 4 pairs of reserved subcarriers on each block, one group of reserved subcarriers means that one subcarrier is selected from each of the four pairs of reserved subcarriers, the four subcarriers form a group, and the other four subcarriers form a group; another block division case is similar, for example, one group of subcarriers are (-498, -444, -390, -336), and the other group of subcarriers are (-497, -443, -389, -335);

subsequent operations are the same as those in a case in which there is a single stream (for example, the case in which there is one OFDM symbol in the foregoing description).

Different reserved subcarriers are allocated to each stream for transmitting a phase factor.

For example, a transmit end has two antennas for transmitting signals, and a receive end has two antennas for receiving the signals. There are two streams that separately transmit OFDM symbols, and subcarriers of an OFDM symbol on either stream are divided into four blocks. Using the first block as an example, a phase factor corresponding to the first stream is $e^{j\phi_{11}}$, and a phase factor corresponding to the second stream is $e^{j\phi_{21}}$, where $\phi_{11}$ represents a phase, of the first stream, on the first block, and $\phi_{21}$ represents a phase, of the second stream, on the first block. Four reserved subcarriers (-498, -444, -390, -336) on the first block are selected to simultaneously transmit phase factor information corresponding to the first stream, and the other four reserved subcarriers (-497, -443, -389, -335) are used to transmit phase factor information corresponding to the second stream. For a specific transmission method, refer to the foregoing embodiments, for example, the transmission modes 1, 2, and 3. Manners of transmitting the phase factor information include: directly transmitting a phase factor, transmitting information obtained after modulation (such as QPSK) is performed on a phase factor, transmitting information obtained after differential modulation is performed on a phase factor, transmitting information obtained after energy modulation is performed on a phase factor, transmitting information obtained after encoding and modulation are performed on a phase factor, transmitting information obtained after encoding and differential modulation are performed on a phase factor, or transmitting information obtained after encoding and energy modulation are performed on a phase factor.

In a third implementation solution, PAPRs of all streams are reduced together. A specific processing method is as follows:

Peak-to-average ratio reduction processing is performed on all streams at the same time, to obtain phase factor information transmitted on each reserved subcarrier;

all the streams transmit same information on the reserved subcarriers;

subsequent operations are the same as those in a case in which there is a single stream (for example, the case in which there is one OFDM symbol in the foregoing description).

Still using a case in which a transmit end has two streams for transmission as an example, subcarriers on an OFDM symbol are still divided into four block, and phase factors corresponding to the blocks are $e^{j\phi_1}$, $e^{j\phi_2}$, $e^{j\phi_3}$, and $e^{j\phi_4}$. The four determined phase factors minimize peak-to-average ratios of both OFDM symbols transmitted by the two streams (or minimize a sum of two peak-to-average ratios). Likewise, four reserved subcarriers (-498, -444, -390, -336) on the first block are selected to simultaneously transmit phase factor information corresponding to the first stream, and the two streams transmit same phase factor information on the four subcarriers. Manners of transmitting the phase factor information include: directly transmitting a phase factor, transmitting information obtained after modulation (such as QPSK) is performed on a phase factor, transmitting information obtained after differential modulation is performed on a phase factor, transmitting information obtained after energy modulation is performed on a phase factor, transmitting information obtained after encoding and modulation are performed on a phase factor, transmitting information obtained after encoding and differential modulation are performed on a phase factor, or transmitting information obtained after encoding and energy modulation are performed on a phase factor. A processing method for other blocks may be obtained by analogy.

Corresponding to the foregoing method embodiments, an embodiment of the present invention further provides a peak-to-average ratio reduction apparatus, where the apparatus is applied in a Wireless Fidelity WiFi system, and, as shown in FIG. 12, includes:

a dividing module 1201, configured to divide subcarriers of an orthogonal frequency division multiplexing OFDM symbol that carries to-be-transmitted data, to obtain multiple blocks;

a determining module 1202, configured to determine multiple phase factors corresponding to the multiple blocks, where the multiple phase factors are used to reduce a peak-to-average ratio of the OFDM symbol; and

a transmission module 1203, configured to: transmit the multiple phase factors by using a particular subcarrier of the OFDM symbol; and multiply data transmitted on each block in the multiple blocks by a corresponding phase factor, and perform transmission.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

Corresponding to the foregoing method embodiments, an embodiment of the present invention further provides a peak-to-average ratio reduction device, where the device is applied in a Wireless Fidelity WiFi system, and, as shown in FIG. 13, includes:

a processor 1301, a memory 1302, a transmitter 1304, and a bus 1303, where the processor 1301, the memory 1302, and the transmitter 1304 transmit data by using the bus 1303, and the memory 1302 is configured to store data processed by the processor 1301; and

the processor 1301 is configured to divide subcarriers of an orthogonal frequency division multiplexing OFDM symbol that carries to-be-transmitted data, to obtain multiple blocks; and determine multiple phase factors corresponding to the multiple blocks, where the multiple phase factors are used to reduce a peak-to-average ratio of the OFDM symbol; and

the transmitter 1304 is configured to: transmit the multiple phase factors by using a particular subcarrier of the OFDM symbol; and multiply each block in the multiple blocks by a corresponding phase factor, and perform transmission.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

Corresponding to the foregoing method embodiments, an embodiment of the present invention further provides a peak-to-average ratio reduction system, where the system is applied in a Wireless Fidelity WiFi system, and includes the peak-to-average ratio reduction apparatus provided in FIG. 12 or the peak-to-average ratio reduction device provided in FIG. 13.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

Corresponding to the foregoing method embodiments, an embodiment of the present invention further provides a peak-to-average ratio reduction method, where the method is applied in a Wireless Fidelity WiFi system, and, as shown in FIG. 14, includes the following steps:

Step 1401: Receive an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor.

Step 1402: Obtain the multiple phase factors according to a signal carried on the particular subcarrier.

Step 1403: Obtain, according to the phase factors and the multiple blocks, data transmitted on the OFDM symbol.

Optionally, the particular subcarrier is a reserved subcarrier, and the reserved subcarrier is a reserved subcarrier in the subcarriers of the OFDM symbol; and

the obtaining the multiple phase factors according to a signal carried on the particular subcarrier includes:

demodulating the signal carried on the particular subcarrier, to obtain phase factor information; and

converting the phase factor information into the phase factors.

Further, after the demodulating the signal carried on the particular subcarrier, the obtaining the multiple phase factors according to a signal carried on the particular subcarrier further includes:

decoding demodulated data to obtain the phase factor information.

The converting the multiple phase factor information into the phase factors includes:

performing conversion according to a mapping rule between the multiple phase factor information and the phase factors, where the mapping rule includes table mapping or formula mapping.

Optionally, the particular subcarrier is a pilot subcarrier, and the pilot subcarrier carries a product of a corresponding phase factor in the multiple phase factors and a pilot signal.

Further, a method for determining the multiple phase factors includes:

obtaining values of the multiple phase factors from a finite set, so that a PAPR obtained after the multiple blocks are multiplied by the multiple phase factors is minimized.

The finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$, or another similar variation.

Further, the method provided in this embodiment of the present invention further includes:

receiving an 802.11 standard frame, where an extra indication bit is added to a signaling field or a service field of the 802.11 standard frame, or an existing bit is reused, and the indication bit or the existing bit is used to notify a receive end whether the peak-to-average ratio reduction method provided in the present invention is used and notify the receive end of a quantity of blocks obtained by means of division; and

determining, according to the indication bit or the reused existing bit, whether the peak-to-average ratio reduction method provided in the present invention is used and the quantity of blocks obtained by means of division.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

Corresponding to the foregoing method embodiments, an embodiment of the present invention further provides a peak-to-average ratio reduction apparatus, where the method is applied in a Wireless Fidelity WiFi system, and, as shown in FIG. 15, includes:

a receiving module 1501, configured to receive an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor;

an obtaining module 1502, configured to obtain the multiple phase factors according to a signal carried on the particular subcarrier; and

a restoration module 1503, configured to obtain, according to the phase factors and the multiple blocks, data transmitted on the OFDM symbol.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

Corresponding to the foregoing method embodiments, an embodiment of the present invention provides a peak-to-average ratio reduction device, where the device is applied in a Wireless Fidelity WiFi system, and, as shown in FIG. 16, includes a processor 1601, a memory 1602, a receiver 1604, and a bus 1603, where: the processor 1601, the memory 1602, and the receiver 1604 transmit data by using the bus 1603, and the memory 1602 is configured to store data processed by the processor 1601;

the receiver 1604 is configured to receive an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor;

the processor 1601 is configured to: obtain the multiple phase factors according to a signal carried on the particular subcarrier; and obtain, according to the phase factors and the multiple blocks, data transmitted on the OFDM symbol.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

Corresponding to the foregoing method embodiments, an embodiment of the present invention further provides a peak-to-average ratio reduction system, where the system is applied in a Wireless Fidelity WiFi system, and includes the peak-to-average ratio reduction apparatus provided in FIG. 15 or the peak-to-average ratio reduction device provided in FIG. 16.

Some technical features involved, for example, a phase factor, a particular subcarrier, subcarrier division, a peak-to-average ratio, and a peak-to-average ratio reduction method, are similar to or corresponding to some technical features involved in the foregoing method embodiments, and are not described again in this embodiment.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit. Specifically, the integrated unit may be implemented by using software in addition to necessary general-purpose hardware, where the general-purpose hardware includes a general-purpose integrated circuit, a general-purpose CPU (English: Central Processing Unit), a digital signal processor (English: Digital Signal Processor, DSP for short), a field programming gate array (English: Field Programming Gate Array, FPGA for short), a programmable logical device (English: Programmable Logical Device, PLD for short), a general-purpose memory, a general-purpose component, or the like. Certainly, alternatively, the integrated unit may be implemented by using an application specific integrated circuit (English: Application Specific Integrated Circuit, ASIC for short), a special-purpose CPU, a special-purpose memory, a special-purpose component, or the like.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (English: Read-Only Memory, ROM for short), a random access memory (English: Random Access Memory, RAM for short), a magnetic disk, or an optical disc.

Alternatively, software or an instruction may be transmitted by using a transmission medium. For example, if software is transmitted from a website, a server, or another remote source by using a coaxial cable, an optical fiber/cable, a twisted pair, a digital subscriber line (English: Digital Subscriber Line, DSL for short) or wireless technologies (such as infrared, radio, and microwave), the coaxial cable, optical fiber/cable, twisted pair, DSL or wireless technologies (such as infrared, radio, and microwave) are included in a definition of the transmission medium.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A peak-to-average ratio reduction method, wherein the method is applied in a Wireless Fidelity WiFi system, and comprises:

   dividing subcarriers of an orthogonal frequency division multiplexing OFDM symbol that carries to-be-transmitted data, to obtain multiple blocks;
   determining multiple phase factors corresponding to the multiple blocks, wherein the multiple phase factors are used to reduce a peak-to-average ratio of the OFDM symbol;
   transmitting the multiple phase factors by using a particular subcarrier of the OFDM symbol; and
   multiplying data transmitted on each block in the multiple blocks by a corresponding phase factor, and performing transmission.

2. The method according to claim 1, wherein:

   the particular subcarrier is a reserved subcarrier, and the reserved subcarrier is a reserved subcarrier in the subcarriers of the OFDM symbol; and
   the transmitting the multiple phase factors by using a particular subcarrier of the OFDM symbol comprises:

      converting the multiple phase factors into phase factor information;
      modulating the phase factor information, to obtain modulated data; and
      carrying the modulated data on the reserved subcarrier for transmission, wherein the modulated data carried on the reserved subcarrier is not multiplied by a phase factor.

3. The method according to claim 2, wherein before the modulating the phase factor information, the transmitting the multiple phase factors by using a particular subcarrier of the OFDM symbol further comprises:

   encoding the phase factor information, to obtain encoded data; and
   the modulating the phase factor information comprises:

      modulating the encoded data.

4. The method according to claim 3, wherein:

   a manner of the encoding comprises: block coding, 1/2 tail-biting convolutional code, CRC coding, Reed-Muller coding, or parity coding.

5. The method according to any one of claims 2 to 4, wherein:

   a manner of the modulating comprises: QPSK modulation, DQPSK modulation, or energy modulation.

6. The method according to any one of claims 2 to 5, before the carrying the modulated data on the reserved subcarrier for transmission, the method further comprises:

   duplicating the modulated data, to obtain duplicated data; and
   the carrying the modulated data on the reserved subcarrier for transmission comprises:

      carrying the duplicated data on the reserved subcarrier for transmission.

7. The method according to any one of claims 2 to 6, wherein:

   the converting the multiple phase factors into phase factor information comprises:

      performing conversion according to a mapping rule between the multiple phase factors and the phase factor information, wherein the mapping rule comprises table mapping or formula mapping.

8. The method according to any one of claims 1 to 7, wherein:

the reserved subcarrier is distributed in an entire frequency domain range of the OFDM symbol; and
the reserved subcarrier is distributed according to a rule that a variance of a sequence number difference between adjacent reserved subcarriers is minimized.

9. The method according to any one of claims 1 to 8, wherein:

the transmitting the multiple phase factors by using a particular subcarrier of the OFDM symbol comprises:

transmitting the multiple phase factors by using reserved subcarriers of the multiple blocks; or
transmitting, by using a reserved subcarrier of each block in the multiple blocks, a phase factor corresponding to each block.

10. The method according to claim 1, wherein:

the particular subcarrier is a pilot subcarrier; and
the transmitting the multiple phase factors by using a particular subcarrier of the OFDM symbol comprises:

carrying the multiple phase factors on the pilot subcarrier for transmission, wherein the pilot subcarrier carries a product of a corresponding phase factor in the multiple phase factors and a pilot signal.

11. The method according to any one of claims 1 to 10, wherein:

the determining multiple phase factors corresponding to the multiple blocks comprises:

obtaining values of the multiple phase factors from a finite set, so that a PAPR obtained after the multiple blocks are multiplied by the multiple phase factors is minimized.

12. The method according to claim 11, wherein:

the finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$.

13. The method according to any one of claims 1 to 12, wherein the method further comprises:

adding an extra indication bit to a signaling field or a service field of an 802.11 standard frame structure, or reusing an existing bit, wherein the indication bit or the existing bit is used to notify a receive end whether the peak-to-average ratio reduction method provided in the present invention is used and notify the receive end of a quantity of blocks obtained by means of division.

14. A peak-to-average ratio reduction apparatus, wherein the apparatus is applied in a Wireless Fidelity WiFi system, and comprises:

a dividing module, configured to divide subcarriers of an orthogonal frequency division multiplexing OFDM symbol that carries to-be-transmitted data, to obtain multiple blocks;
a determining module, configured to determine multiple phase factors corresponding to the multiple blocks, wherein the multiple phase factors are used to reduce a peak-to-average ratio of the OFDM symbol; and
a transmission module, configured to: transmit the multiple phase factors by using a particular subcarrier of the OFDM symbol; and multiply each block in the multiple blocks by a corresponding phase factor, and perform transmission.

15. The apparatus according to claim 14, wherein:

the particular subcarrier is a reserved subcarrier, and the reserved subcarrier is a reserved subcarrier in the subcarriers of the OFDM symbol; and
the transmission module comprises:

a conversion module, configured to convert the multiple phase factors into phase factor information;
a modulation module, configured to modulate the phase factor information, to obtain modulated data; and

a first carrying module, configured to carry the modulated data on the reserved subcarrier for transmission, wherein the modulated data carried on the reserved subcarrier is not multiplied by a phase factor.

16. The apparatus according to claim 15, wherein the transmission module further comprises:

an encoding module, configured to encode the phase factor information, to obtain encoded data; and
the modulating the phase factor information comprises:

modulating the encoded data.

17. The apparatus according to claim 16, wherein:

a manner of the encoding comprises: block coding, 1/2 tail-biting convolutional code, CRC coding, Reed-Muller coding, or parity coding.

18. The apparatus according to any one of claims 15 to 17, wherein:

a manner of the modulating comprises: QPSK modulation, DQPSK modulation, or energy modulation.

19. The apparatus according to any one of claims 15 to 18, wherein the transmission module further comprises:

a duplication module, configured to duplicate the modulated data, to obtain duplicated data; and
the carrying the modulated data on the reserved subcarrier for transmission comprises:

carrying the duplicated data on the reserved subcarrier for transmission.

20. The apparatus according to any one of claims 15 to 19, wherein:

the converting the multiple phase factors into phase factor information comprises:

performing conversion according to a mapping rule between the multiple phase factors and the phase factor information, wherein the mapping rule comprises table mapping or formula mapping.

21. The apparatus according to any one of claims 14 to 20, wherein:

the reserved subcarrier is distributed in an entire frequency domain range of the OFDM symbol; and
the reserved subcarrier is distributed according to a rule that a variance of a sequence number difference between adjacent reserved subcarriers is minimized.

22. The apparatus according to any one of claims 14 to 21, wherein:

the transmitting the multiple phase factors by using a particular subcarrier of the OFDM symbol comprises:

transmitting the multiple phase factors by using reserved subcarriers of the multiple blocks; or
transmitting, by using a reserved subcarrier of each block in the multiple blocks, a phase factor corresponding to each block.

23. The apparatus according to claim 14, wherein:

the particular subcarrier is a pilot subcarrier; and
the transmission module comprises:

a second carrying module, configured to carry the multiple phase factors on the pilot subcarrier for transmission, wherein the pilot subcarrier carries a product of a corresponding phase factor in the multiple phase factors and a pilot signal.

24. The apparatus according to any one of claims 14 to 23, wherein:

the determining multiple phase factors corresponding to the multiple blocks comprises:

obtaining values of the multiple phase factors from a finite set, so that a PAPR obtained after the multiple blocks are multiplied by the multiple phase factors is minimized.

**25.** The apparatus according to claim 24, wherein:

the finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$ .

**26.** The apparatus according to any one of claims 14 to 25, wherein:

the apparatus is a station device or an access point device.

**27.** A peak-to-average ratio reduction device, wherein the device is applied in a Wireless Fidelity WiFi system, and comprises a processor, a memory, a transmitter, and a bus, wherein: the processor, the memory, and the transmitter transmit data by using the bus, and the memory is configured to store data processed by the processor; the processor is configured to divide subcarriers of an orthogonal frequency division multiplexing OFDM symbol that carries to-be-transmitted data, to obtain multiple blocks; and determine multiple phase factors corresponding to the multiple blocks, wherein the multiple phase factors are used to reduce a peak-to-average ratio of the OFDM symbol; and the transmitter is configured to: transmit the multiple phase factors by using a particular subcarrier of the OFDM symbol; and multiply each block in the multiple blocks by a corresponding phase factor, and perform transmission.

**28.** The device according to claim 27, wherein:

the particular subcarrier is a reserved subcarrier, and the reserved subcarrier is a reserved subcarrier in the subcarriers of the OFDM symbol; and the transmitting the multiple phase factors by using a particular subcarrier of the OFDM symbol comprises:

converting the multiple phase factors into phase factor information; modulating the phase factor information, to obtain modulated data; and carrying the modulated data on the reserved subcarrier for transmission, wherein the modulated data carried on the reserved subcarrier is not multiplied by a phase factor.

**29.** The device according to claim 28, wherein before the modulating the phase factor information, the transmitting the multiple phase factors by using a particular subcarrier of the OFDM symbol further comprises:

encoding the phase factor information, to obtain encoded data; and the modulating the phase factor information comprises:

modulating the encoded data.

**30.** The device according to claim 29, wherein:

a manner of the encoding comprises: block coding, 1/2 tail-biting convolutional code, CRC coding, Reed-Muller coding, or parity coding.

**31.** The device according to any one of claims 28 to 30, wherein:

a manner of the modulating comprises: QPSK modulation, DQPSK modulation, or energy modulation.

**32.** The device according to any one of claims 28 to 31, wherein the transmitter is further configured to duplicate the modulated data, to obtain duplicated data; and the carrying the modulated data on the reserved subcarrier for transmission comprises:

carrying the duplicated data on the reserved subcarrier for transmission.

33. The device according to any one of claims 28 to 32, wherein:

the converting the multiple phase factors into phase factor information comprises:

performing conversion according to a mapping rule between the multiple phase factors and the phase factor information, wherein the mapping rule comprises table mapping or formula mapping.

34. The device according to any one of claims 27 to 33, wherein:

the reserved subcarrier is distributed in an entire frequency domain range of the OFDM symbol; and the reserved subcarrier is distributed according to a rule that a variance of a sequence number difference between adjacent reserved subcarriers is minimized.

35. The device according to any one of claims 27 to 34, wherein:

the transmitting the multiple phase factors by using a particular subcarrier of the OFDM symbol comprises:

transmitting the multiple phase factors by using reserved subcarriers of the multiple blocks; or transmitting, by using a reserved subcarrier of each block in the multiple blocks, a phase factor corresponding to each block.

36. The device according to claim 27, wherein:

the particular subcarrier is a pilot subcarrier; and the transmitting the multiple phase factors by using a particular subcarrier of the OFDM symbol comprises:

carrying the multiple phase factors on the pilot subcarrier for transmission, wherein the pilot subcarrier carries a product of a corresponding phase factor in the multiple phase factors and a pilot signal.

37. The device according to any one of claims 27 to 36, wherein:

the determining multiple phase factors corresponding to the multiple blocks comprises:

obtaining values of the multiple phase factors from a finite set, so that a PAPR obtained after the multiple blocks are multiplied by the multiple phase factors is minimized.

38. The device according to claim 37, wherein:

the finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$ .

39. The device according to any one of claims 27 to 38, wherein:

the device is a station device or an access point device.

40. A peak-to-average ratio reduction system, wherein the system is applied in a Wireless Fidelity WiFi system, and the system comprises the apparatus according to any one of claims 14 to 26 or the device according to any one of claims 37 to 39.

41. A peak-to-average ratio reduction method, wherein the method is applied in a Wireless Fidelity WiFi system, and comprises:

receiving an orthogonal frequency division multiplexing OFDM symbol, wherein subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor;
obtaining the multiple phase factors according to a signal carried on the particular subcarrier; and

obtaining, according to the phase factors and the multiple blocks, data transmitted on the OFDM symbol.

42. The method according to claim 41, wherein:

the particular subcarrier is a reserved subcarrier, and the reserved subcarrier is a reserved subcarrier in the subcarriers of the OFDM symbol; and
the obtaining the multiple phase factors according to a signal carried on the particular subcarrier comprises:

demodulating the signal carried on the particular subcarrier, to obtain phase factor information; and
converting the phase factor information into the phase factors.

43. The method according to claim 42, wherein after the demodulating the signal carried on the particular subcarrier, the obtaining the multiple phase factors according to a signal carried on the particular subcarrier further comprises:

decoding demodulated data to obtain the phase factor information.

44. The device according to claim 42 or 43, wherein:

the converting the multiple phase factor information into the phase factors comprises:

performing conversion according to a mapping rule between the multiple phase factor information and the phase factors, wherein the mapping rule comprises table mapping or formula mapping.

45. The method according to claim 41, wherein:

the particular subcarrier is a pilot subcarrier, and the pilot subcarrier carries a product of a corresponding phase factor in the multiple phase factors and a pilot signal.

46. The method according to any one of claims 41 to 45, wherein:

a method for determining the multiple phase factors comprises:

obtaining values of the multiple phase factors from a finite set, so that a PAPR obtained after the multiple blocks are multiplied by the multiple phase factors is minimized.

47. The method according to claim 46, wherein:

the finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$.

48. The method according to any one of claims 41 to 47, wherein the method further comprises:

receiving an 802.11 standard frame, wherein an extra indication bit is added to a signaling field or a service field of the 802.11 standard frame, or an existing bit is reused, and the indication bit or the existing bit is used to notify a receive end whether the peak-to-average ratio reduction method provided in the present invention is used and notify the receive end of a quantity of blocks obtained by means of division; and
determining, according to the indication bit or the reused existing bit, whether the peak-to-average ratio reduction method provided in the present invention is used and the quantity of blocks obtained by means of division.

49. A peak-to-average ratio reduction apparatus, wherein the apparatus is applied in a Wireless Fidelity WiFi system, and comprises:

a receiving module, configured to receive an orthogonal frequency division multiplexing OFDM symbol, wherein subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor;
an obtaining module, configured to obtain the multiple phase factors according to a signal carried on the particular subcarrier; and

a restoration module, configured to obtain, according to the phase factors and the multiple blocks, data transmitted on the OFDM symbol.

**50.** The apparatus according to claim 49, wherein:

the particular subcarrier is a reserved subcarrier, and the reserved subcarrier is a reserved subcarrier in the subcarriers of the OFDM symbol; and
the obtaining the multiple phase factors according to a signal carried on the particular subcarrier comprises:

demodulating the signal carried on the particular subcarrier, to obtain phase factor information; and
converting the phase factor information into the phase factors.

**51.** The apparatus according to claim 50, wherein the obtaining module further comprises:

a demodulation module, configured to decode demodulated data to obtain the phase factor information.

**52.** The apparatus according to claim 50 or 51, wherein:

the converting the multiple phase factor information into the phase factors comprises:

performing conversion according to a mapping rule between the multiple phase factor information and the phase factors, wherein the mapping rule comprises table mapping or formula mapping.

**53.** The apparatus according to claim 49, wherein:

the particular subcarrier is a pilot subcarrier, and the pilot subcarrier carries a product of a corresponding phase factor in the multiple phase factors and a pilot signal.

**54.** The apparatus according to any one of claims 49 to 53, wherein:

a method for determining the multiple phase factors comprises:

obtaining values of the multiple phase factors from a finite set, so that a PAPR obtained after the multiple blocks are multiplied by the multiple phase factors is minimized.

**55.** The apparatus according to claim 54, wherein:

the finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$.

**56.** The apparatus according to any one of claims 49 to 55, wherein:

the receiving module is further configured to receive an 802.11 standard frame, wherein an extra indication bit is added to a signaling field or a service field of the 802.11 standard frame, or an existing bit is reused, and the indication bit or the existing bit is used to notify a receive end whether the peak-to-average ratio reduction method provided in the present invention is used and notify the receive end of a quantity of blocks obtained by means of division; and
the apparatus further comprises: a determining module, configured to determine, according to the indication bit or the reused existing bit, whether the peak-to-average ratio reduction method provided in the present invention is used and the quantity of blocks obtained by means of division.

**57.** A peak-to-average ratio reduction device, wherein the device is applied in a Wireless Fidelity WiFi system, and comprises a processor, a memory, a receiver, and a bus, wherein: the processor, the memory, and the receiver transmit data by using the bus, and the memory is configured to store data processed by the processor; and
the receiver is configured to receive an orthogonal frequency division multiplexing OFDM symbol, wherein subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor; and

the processor is configured to: obtain the multiple phase factors according to a signal carried on the particular subcarrier; and obtain, according to the phase factors and the multiple blocks, data transmitted on the OFDM symbol.

**58.** The device according to claim 57, wherein:

the particular subcarrier is a reserved subcarrier, and the reserved subcarrier is a reserved subcarrier in the subcarriers of the OFDM symbol; and

the obtaining the multiple phase factors according to a signal carried on the particular subcarrier comprises:

demodulating the signal carried on the particular subcarrier, to obtain phase factor information; and converting the phase factor information into the phase factors.

**59.** The device according to claim 58, wherein the processor is further configured to decode demodulated data to obtain the phase factor information.

**60.** The device according to claim 58 or 59, wherein:

the converting the multiple phase factor information into the phase factors comprises:

performing conversion according to a mapping rule between the multiple phase factor information and the phase factors, wherein the mapping rule comprises table mapping or formula mapping.

**61.** The device according to claim 57, wherein:

the particular subcarrier is a pilot subcarrier, and the pilot subcarrier carries a product of a corresponding phase factor in the multiple phase factors and a pilot signal.

**62.** The device according to any one of claims 57 to 61, wherein:

a method for determining the multiple phase factors comprises:

obtaining values of the multiple phase factors from a finite set, so that a PAPR obtained after the multiple blocks are multiplied by the multiple phase factors is minimized.

**63.** The device according to claim 62, wherein:

the finite set is $\{e^{j*0}, e^{j*\frac{\pi}{2}}, e^{j*\pi}, e^{j*\frac{3\pi}{2}}\}$ or $\{e^{j\frac{\pi}{4}}, e^{j\frac{3\pi}{4}}, e^{j\frac{5\pi}{4}}, e^{j\frac{7\pi}{4}}\}$ .

**64.** The device according to any one of claims 57 to 63, wherein:

the receiver is further configured to receive an 802.11 standard frame, wherein an extra indication bit is added to a signaling field or a service field of the 802.11 standard frame, or an existing bit is reused, and the indication bit or the existing bit is used to notify a receive end whether the peak-to-average ratio reduction method provided in the present invention is used and notify the receive end of a quantity of blocks obtained by means of division; and the processor is further configured to determine, according to the indication bit or the reused existing bit, whether the peak-to-average ratio reduction method provided in the present invention is used and the quantity of blocks obtained by means of division.

**65.** A peak-to-average ratio reduction system, wherein the system is applied in a Wireless Fidelity WiFi system, and the system comprises the apparatus according to any one of claims 49 to 56 or the device according to any one of claims 57 to 64.

CCDF of OFDM

FIG. 1

FIG. 2

FIG. 3

FIG. 3a

$e^{j\phi_1}$      $e^{j\phi_2}$      $e^{j\phi_4}$      $e^{j\phi_4}$

Block 1      Block 2      Block 3      Block 4

FIG. 4

$e^{j\phi_i}$      $e^{j\phi_i}$      $e^{j\phi_i}$      $e^{j\phi_i}$

Block

FIG. 5

01      01      01      01

Block

FIG. 6

$$\Phi_s \qquad \Phi_s \qquad \Phi_s \qquad \Phi_s$$

Symbol s

Block

$$\Phi_{s+1} = \Phi_s e^{j\phi_{s+1}} \quad \Phi_{s+1} = \Phi_s e^{j\phi_{s+1}} \quad \Phi_{s+1} = \Phi_s e^{j\phi_{s+1}} \quad \Phi_{s+1} = \Phi_s e^{j\phi_{s+1}}$$

Symbol s+1

Block

FIG. 7

| Short Training Field | Long Training Field | Signal Field | Service Field | Data Field | Tail & Padding |
|---|---|---|---|---|---|

FIG. 8

OFDM symbol → | Divided into Q blocks | 901 → Q*q bits → | Encoded | 902 → k bits → | Modulated | 903 → K symbols → | Duplicated for p times | 904 → K*p symbols → | Mapped to subcarriers | 905

FIG. 9

26 subcarriers are grouped as one subband

1001

8 bits → Block coding → 16 bits → DQPSK modulation → 8 symbols → Duplicated for 3 times → 24 symbols → Mapped to subcarriers

1002

8 bits → Block coding → 16 bits → QPSK modulation → 8 symbols → Duplicated for 3 times → 24 symbols → Mapped to subcarriers

1003

8 bits → Block coding → 16 bits → Energy modulation → 16 symbols → Mapped to subcarriers

52 subcarriers are grouped as one subband

1004

8 bits → Block coding → 16 bits → DQPSK modulation → 8 symbols → Duplicated for 3 times → 24 symbols → Mapped to subcarriers

1005

8 bits → Block coding → 16 bits → QPSK modulation → 8 symbols → Duplicated twice → 16 symbols → Mapped to subcarriers

1006

8 bits → Block coding → 16 bits → Energy modulation → 16 symbols → Mapped to subcarriers

FIG. 10

1001a

1002a

1003a

FIG. 10a

FIG. 10b

FIG. 11a

FIG. 11

1201

Dividing module

1202

Determining module

1203

Transmission module

FIG. 12

1301          1304

Processor      Transmitter

Bus                                                    1303

Memory

1302

FIG. 13

Receive an orthogonal frequency division multiplexing OFDM symbol, where subcarriers of the OFDM symbol are divided into multiple blocks, the multiple blocks are corresponding to multiple phase factors, the multiple phase factors are used to reduce a peak-to-average ratio of the OFDM symbol, a particular subcarrier of the OFDM symbol carries the multiple phase factors, and each block in the multiple blocks carries data that is multiplied by a corresponding phase factor

1401

Obtain the multiple phase factors according to a signal carried on the particular subcarrier

1402

Obtain, according to the phase factors and the multiple blocks, data transmitted on the OFDM symbol

1403

FIG. 14

```
        ┌─────────────────────────────┐      1501
        │      Receiving module       │ ⌇
        └─────────────────────────────┘
                      │
        ┌─────────────────────────────┐      1502
        │      Obtaining module       │ ⌇
        └─────────────────────────────┘
                      │
        ┌─────────────────────────────┐      1503
        │     Restoration module      │ ⌇
        └─────────────────────────────┘
```

FIG. 15

```
                       1601          1604
                  ┌───────────┐  ┌───────────┐
                  │ Processor │  │ Receiver  │         1603
                  └───────────┘  └───────────┘      ⌇
        Bus            │              │
    ◄───────────────────────────────────────────────►
                      │
               ┌───────────┐
               │  Memory   │
               └───────────┘
                   ⌇  1602
```

FIG. 16

# INTERNATIONAL SEARCH REPORT

| | International application No. |
|---|---|
| | PCT/CN2015/072695 |

**A. CLASSIFICATION OF SUBJECT MATTER**

H04L 27/26 (2006.01) i

According to International Patent Classification (IPC) or to both national classification and IPC

**B. FIELDS SEARCHED**

Minimum documentation searched (classification system followed by classification symbols)

H04B; H04L; H04W; H04Q

Documentation searched other than minimum documentation to the extent that such documents are included in the fields searched

Electronic data base consulted during the international search (name of data base and, where practicable, search terms used)

WPI; EPODOC; CNKI; IEEE; CNPAT: wireless, fidelity, Peak-to-Average Power Radio, PAPR, WiFi, OFDM, subcarrier+, divid+, phase, reduce+, transfer +, multiply

**C. DOCUMENTS CONSIDERED TO BE RELEVANT**

| Category* | Citation of document, with indication, where appropriate, of the relevant passages | Relevant to claim No. |
|---|---|---|
| A | CN 101087284 A (LUO, Ranze) 12 December 2007 (12.12.2007) description, page 2, the fourth paragraph to page 3, the first paragraph | 1-65 |
| A | CN 101374125 A (DA TANG MOBILE COMMUNICATIONS EQUIPMENT CO., LTD.) 25 February 2009 (25.02.2009) the whole document | 1-65 |
| A | CN 104243383 A (HUAWEI TECHNOLOGIES CO., LTD.) 24 December 2014 (24.12.2014) the whole document | 1-65 |
| A | CN 102461108 A (INSTITUT NATIONAL DES SCIENCES APPLIQUEES DE RENNES et al.) 16 May 2012 (16.05.2012) the whole document | 1-65 |
| A | CN 101958873 A (HUAZHONG UNIVERSITY OF SCIENCE AND TECHNOLOGY) 26 January 2011 (26.01.2011) the whole document | 1-65 |

☒ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 13 July 2015 | 29 July 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHONG, Maojian<br><br>Telephone No. (86-10) 62413360 |

Form PCT/ISA /210 (second sheet) (July 2009)

## INTERNATIONAL SEARCH REPORT

| International application No. |
|---|
| PCT/CN2015/072695 |

C (Continuation).     DOCUMENTS CONSIDERED TO BE RELEVANT

| Category* | Citation of document, with indication, where appropriate, of the relevant passages | Relevant to claim No. |
|---|---|---|
| A | WO 2008071599 A1 (THOMSON BROADCAST & MULTIMEDIA S. A.) 19 June 2008 (19.06.2008) the whole document | 1-65 |

Form PCT/ISA /210 (continuation of second sheet) (July 2009)

INTERNATIONAL SEARCH REPORT
Information on patent family members

| International application No. |
| --- |
| PCT/CN2015/072695 |

| Patent Documents referred in the Report | Publication Date | Patent Family | Publication Date |
| --- | --- | --- | --- |
| CN 101087284 A | 12 December 2007 | None | |
| CN 101374125 A | 25 February 2009 | None | |
| CN 104243383 A | 24 December 2014 | None | |
| CN 102461108 A | 16 May 2012 | FR 2945172 A1 | 5 November 2010 |
| | | ES 2470743 T3 | 24 June 2014 |
| | | EP 2428012 A1 | 14 March 2012 |
| | | JP 2012526438 A | 25 October 2012 |
| | | US 2012140836 A1 | 7 June 2012 |
| | | WO 2010128057 A1 | 11 November 2010 |
| CN 101958873 A | 26 January 2011 | None | |
| WO 2008071599 A1 | 19 June 2008 | EP 1933517 A1 | 18 June 2008 |

Form PCT/ISA /210 (patent family annex) (July 2009)